# EUROPEAN PATENT SPECIFICATION

(11) **EP 4 180 204 B1**
(45) Date of publication and mention of the grant of the patent: **18.02.2026**
(21) Application number: 22203811.9
(22) Date of filing: 26.10.2022
(51) Int. Cl.: B29C 45/14, B29C 37/00, C08J 5/12, C09J 5/02, B29C 65/08, B29K 705/02, C08K 5/378

(54) **METHOD OF MANUFACTURING A COMPOSITE MEMBER AND COMPOSITE MEMBER**
VERFAHREN ZUR HERSTELLUNG EINES VERBUNDELEMENTS UND VERBUNDELEMENT
PROCÉDÉ DE FABRICATION D'UN ÉLÉMENT COMPOSITE ET ÉLÉMENT COMPOSITE

(30) Priority: 12.11.2021 JP 2021184971
(43) Date of publication of application: 17.05.2023
(73) Proprietor: Sintokogio, Ltd., Nagoya-shi, Aichi 450-6424 (JP)
(72) Inventor: Ito, Yuuka, Nagoya-shi, Aichi 450-6424 (JP); Yamaguchi, Eiji, Nagoya-shi, Aichi 450-6424 (JP)
(74) Representative: Hoffmann Eitle

(56) References cited:
- EP-A1- 2 221 398
- JP-A- 2013 083 005
- JP-A- 2021 017 028
- US-A1- 2021 107 270

## Description

### CROSS-REFERENCE TO RELATED APPLICATIONS

This application is based on and claims the benefit of priority from Japanese Patent Application No. 2021-184971 filed on November 12, 2021.

### TECHNICAL FIELD

The present disclosure relates to a method of manufacturing a composite member and the composite member.

### BACKGROUND

WO 2017/141381 discloses a method of manufacturing a composite member. In this method, the composite member is manufactured using a base material and a resin member that are bonded to each other. On a surface of the base material, micro-order or nano-order asperities are formed. A resin member is applied into the micro-order or nano-order asperities and is hardened therein, producing an enhanced anchor effect as compared with millimeter-order asperities. Thus, the composite member manufactured by this method has high bonding strength.

### SUMMARY

Aluminum is lighter and stronger than iron and thus is useful as a base material of the composite member. The manufacturing method described in WO 2017/141381 is susceptible to improvement in view of improvement in the bonding strength and airtightness of the composite member including the base material of aluminum.

Methods for manufacturing composite members are also known from documents JP 2013 083005 A , EP 2 221 398 A1, JP 2021 017028 A or US 2021/107270 A1.

The present invention is defined by a method of manufacturing a composite member according to claim 1, the composite member including an aluminum member and a resin member that are bonded to each other. The manufacturing method includes blasting, performing, applying, and bonding. In the blasting, blasting is performed on the surface of the aluminum member, so that asperities are formed on the surface of the aluminum member. The blasting material contains alumina. In the performing, the surface of the aluminum member on which asperities are formed is subjected to hydrothermal treatment, so that the surface of the asperities is modified into aluminum hydroxide and a surface nano structure is formed on the surface of the asperities. In the applying, a binder containing a triazine thiol derivative is applied to the surface of the asperities of the aluminum member, the surface being modified into aluminum hydroxide and having the surface nano structure, thereby forming a coating bonded to the aluminum member. In the bonding, the coating and the resin member are bonded to each other.

According to the manufacturing method, blasting is performed on the surface of the aluminum member. In the blasting, a natural oxide film formed on the surface of the aluminum member is reduced in thickness (removed) by blasting. Asperities are formed on the surface of the aluminum member by blasting. By the performing, the surface of the aluminum member on which asperities are formed is subjected to hydrothermal treatment, so that the surface of the asperities is modified into aluminum hydroxide and a surface nano structure is formed on the surface of the asperities. By the modifying, a functional group (e.g., a hydroxy group) of aluminum hydroxide is applied to the asperities on the surface of the aluminum member. In the applying, a binder containing a triazine thiol derivative is applied to the surface of the aluminum member, so that a coating bonded to the aluminum member modified into aluminum hydroxide is formed. Thus, three effects are combined as follows: the formation of the coating into the asperities on the surface of the aluminum member, the formation of the coating into the surface nano structure with a contact surface area extended between the aluminum member and the coating by the surface nano structure on the surface layer of the asperities, and molecular bonding between the functional group on the surface of the asperities and the triazine thiol derivative contained in the coating. An organic combination of these three configurations produces a synergy effect, which cannot be obtained by simply adding the effects of the individual configurations, achieving strong bonding. In the bonding, the resin member is bonded to the surface of the aluminum member on which the coating is formed. The resin member is strongly bonded by molecular bonding between the functional group on the surface and the triazine thiol derivative contained in the coating. Sharp portions on the asperities formed by the blasting are rounded by the modifying and are strongly bonded to the coating as described above. Thus, this manufacturing method achieves an additional effect of reducing the occurrence of breaks on the coating from sharp portions. As described above, with a chemical bond by molecular bonding and a mechanical bond by an anchor effect in a large surface area, the composite member is manufactured such that the aluminum member and the resin member are strongly and tightly bonded to each other with the coating interposed therebetween. The tightly bonded composite member has high airtightness and high thermal conductivity at a bonded interface, achieving high practicability. Thus, according to the method of manufacturing the composite member, the composite member can be manufactured with high bonding strength and airtightness.

In an embodiment, a plurality of pores having a pore size of 10 nm or more and less than 1000 nm may be formed on the surface nano structure, and the surface nano structure may have a thickness of 0.01 µm or more and 1 µm or less. In this case, the resin member is applied into the plurality of pores formed on the surface nano structure and is hardened therein, achieving an anchor effect. Thus, in this manufacturing method, the surface nano structure is formed on the surface of the aluminum member by the surface hydroxylation, so that the aluminum member can be changed to a shape including a coating and a resin member with higher adhesion than an aluminum member having not been subjected to surface hydroxylation.

According to an embodiment, in the blasting, abrasive grains having sharp projections with a particle size of 30 µm or more and 710 µm or less may be injected to blast with a projection pressure of 0.5 MPa or more and 2.0 MPa or less. Hence, in this manufacturing method, asperities can be formed on the surface of the aluminum member after a natural oxide film formed on the surface of the aluminum member is properly removed. Thus, in this manufacturing method, the surface nano structure can be uniformly formed on the surface of the aluminum member and the anchor effect can be properly obtained in the surface hydroxylation.

In an embodiment, in hydrothermal treatment in the performing, the hydrothermal treatment may be performed on the surface of the aluminum member such that the surface reacts with pure water at 70°C or more and 100C° or less.

In an embodiment, the electric conductivity of pure water may be 0.054 µS/cm or more and 10 µS/cm or less. Pure water with a low electric conductivity has a low impurity content. In this manufacturing method, residual impurities other than aluminum hydroxide on the surface of the aluminum member can be reduced by using pure water having the electric conductivity in the surface hydroxylation. Thus, this manufacturing method can prevent impurities from depriving a functional group on the surface of the aluminum member, achieving strong molecular bonding.

In an embodiment, in the performing, the surface of the aluminum member may be cleaned with the water, and the surface of the aluminum member may be modified into aluminum hydroxide. When the surface of the aluminum member has organic contamination, the contamination may reduce the wettability of the coating and the resin member and interfere with a chemical bond between the surface of the aluminum member and the coating and the resin member. In this manufacturing method, the surface of the aluminum member is cleaned with water used for modification into aluminum hydroxide. Thus, this manufacturing method can suppress a reduction in bonding strength, the reduction being caused by organic contamination.

In an embodiment, the aluminum hydroxide may contain at least one of diaspore, boehmite, pseudo-boehmite, bayerite, norstrandite, gibbsite, and doyleite.

In an embodiment, the triazine thiol derivative may contain at least one functional group selected from primary amine, secondary amine, tertiary amine, an epoxy group, a hydroxy group, a thiol group, an azido group, and an alkyl group. In this case, in the coating, a coating is formed by binding the triazine thiol derivative and the functional group on the surface of the aluminum member modified into aluminum hydroxide. In the bonding, the triazine thiol derivative contained in the coating and the functional group on the surface of the resin member bind to each other, and the resin member is bonded to the surface of the aluminum member on which the coating is formed. In this way, the coating is molecular bonded to the aluminum member modified into aluminum hydroxide and the resin member by the functional group of the triazine thiol derivative, so that the coating is strongly bonded.

In an embodiment, in the bonding, the resin member may be bonded to the surface of the aluminum member on which the coating is formed by injection molding, thermal compression molding, press forming, or ultrasonic bonding. Thus, this manufacturing method can easily bond the resin member to the surface of the aluminum member.

The present invention is also defined by a composite member according to claim 10. The composite member contains an aluminum member, on which asperities are formed, and a triazine thiol derivative and includes a coating bonded to the surface of the aluminum member and a resin member bonded to the coating. A surface nano structure is formed on the asperities, and the surface nano structure is made of aluminum hydroxide. The asperities are formed like spikes on the surface of the aluminum member, and arithmetic mean roughness determined for the asperities by JIS B 0601 is 0.7 µm or more and 5.0 µm or less.

In this composite member, the asperities are formed on the surface of the aluminum member. The surface nano structure is formed on the asperities. The surface nano structure is made of aluminum hydroxide. The triazine thiol derivative contained in the coating and the functional group of aluminum hydroxide on the surface of the aluminum member bind to each other, thereby bonding the coating to the aluminum member. Thus, three effects are combined as follows: the formation of the coating into the asperities on the surface of the aluminum member, the formation of the coating into the surface nano structure with a contact surface area extended between the aluminum member and the coating by the surface nano structure on the surface layer of the asperities, and molecular bonding between the functional group on the surface of the asperities and the triazine thiol derivative contained in the coating. An organic combination of these three configurations produces a synergy effect, which cannot be obtained by simply adding the effects of the individual configurations, achieving strong bonding. Moreover, the resin member is bonded to the surface of the aluminum member on which the coating is formed. The resin member is strongly bonded by, for example, molecular bonding between the functional group on the surface and the triazine thiol derivative contained in the coating. Sharp portions on the asperities on the surface of the aluminum member are rounded by forming the surface nano structure (forming aluminum hydroxide) and are strongly bonded to the coating as described above. Thus, this manufacturing method achieves an additional effect of reducing the occurrence of breaks on the coating from sharp portions. As described above, with a chemical bond by molecular bonding and a mechanical bond by an anchor effect in a large surface area, the composite member is configured such that the aluminum member and the resin member are strongly and tightly bonded to each other with the coating interposed therebetween. The tightly bonded composite member has high airtightness and high thermal conductivity at a bonded interface, achieving high practicability. Thus, this composite member can improve bonding strength and airtightness between the aluminum member and the resin member.

In an embodiment, the surface of the aluminum member may be substantially phosphorus-free, and the aluminum hydroxide may contain at least one of boehmite, pseudo-boehmite, diaspore, bayerite, norstrandite, gibbsite, and doyleite. In this case, phosphorus is not left on the surface of the aluminum member and thus it is assumed that a functional group on the surface of the aluminum member and a triazine thiol derivative contained in the coating are molecular bonded to each other while the functional group on the surface of the aluminum member is not deprived by these elements. Thus, this composite member has a structure that improves bonding strength and airtightness between the aluminum member and the resin member.

In an embodiment, the triazine thiol derivative may contain at least one functional group selected from primary amine, secondary amine, tertiary amine, an epoxy group, a hydroxy group, a thiol group, an azido group, and an alkyl group. In this case, in the composite member, a coating is formed by binding the triazine thiol derivative and the functional group on the surface of the aluminum member made of aluminum hydroxide. Subsequently, the triazine thiol derivative contained in the coating and the functional group on the surface of the resin member bind to each other, and the resin member is bonded to the surface of the aluminum member with the coating interposed therebetween. In this way, the coating is molecular bonded to the aluminum member made of aluminum hydroxide and the resin member by the functional group of the triazine thiol derivative, so that the coating is strongly bonded.

In an embodiment, the surface of the aluminum member may be substantially magnesium-free and sodium-free. In this case, magnesium and sodium are not left on the surface of the aluminum member and thus it is assumed that a functional group on the surface of the aluminum member and a triazine thiol derivative contained in the coating are molecular bonded to each other while the functional group on the surface of the aluminum member is not deprived by these elements. Thus, this composite member has a structure that improves bonding strength and airtightness between the aluminum member and the resin member.

In an embodiment, the surface of the aluminum member may be substantially iron-free and calcium-free. In this case, iron and calcium are not left on the surface of the aluminum member and thus it is assumed that a functional group on the surface of the aluminum member and a triazine thiol derivative contained in the coating are molecular bonded to each other while the functional group on the surface of the aluminum member is not deprived by these elements. Thus, this composite member has a structure that improves bonding strength and airtightness between the aluminum member and the resin member.

In an embodiment, an arithmetic mean inclination on the surface of the aluminum member bonded to the coating may be 0.17 or more and 0.50 or less. By using the aluminum member having a surface with an arithmetic mean inclination of 0.17 or more and 0.50 or less, the composite member can increase the surface area of the aluminum member, thereby properly obtaining an anchor effect.

In an embodiment, a root-mean-square inclination on the surface of the aluminum member bonded to the coating may be 0.27 or more and 0.60 or less. By using the aluminum member having a surface with a root-mean-square inclination of 0.27 or more and 0.60 or less, the composite member can increase the surface area of the aluminum member, thereby properly obtaining an anchor effect.

According to an aspect and an embodiment of the present disclosure, a method of manufacturing a composite member having high bonding strength and airtightness and a composite member having high bonding strength and airtightness are provided.

### BRIEF DESCRIPTION OF THE DRAWINGS

FIG. 1 is a perspective view illustrating a composite member according to an embodiment;
FIG. 2 is a cross-sectional view of the composite member taken along line II-II of FIG. 1;
FIG. 3 is a conceptual diagram illustrating the composite member of FIG. 2;
FIG. 4 is a conceptual diagram illustrating a blasting machine used for a method of manufacturing the composite member according to the embodiment;
FIG. 5 is an explanatory drawing illustrating the configuration of the blasting machine used for the method of manufacturing the composite member according to the embodiment;
FIG. 6 is a cross-sectional view of a blast nozzle illustrated in FIG. 5;
FIG. 7 is a top view of a mold used for injection molding;
FIG. 8 is a cross-sectional view of the mold taken along line VIII-VIII of FIG. 7;
FIG. 9 is a flowchart of the method of manufacturing the composite member according to the embodiment;
FIG. 10 is a conceptual diagram of blasting;
FIG. 11 is an explanatory drawing of a scan of blasting;
FIGS. 12A-12E are explanatory drawings of the manufacturing process of the composite member; and
FIG. 13 indicates the analysis results of the surface compositions of aluminum members.

### DETAILED DESCRIPTION

An embodiment will be described below with reference to the accompanying drawings. In the following explanation, the same or equivalent elements are indicated by the same reference numerals and a duplicate explanation thereof is omitted. Moreover, "bonding strength" in the present embodiment will be described as "shearing strength". A blasting material (an abrasive grain) in the present embodiment is a component to be injected during blasting. Examples of the blasting material includes ceramic (alumina, silicon carbide) grains. The particle size of the blasting material in the present embodiment is indicated by a mean particle diameter (D50) unless otherwise specified.

### [Composite member]

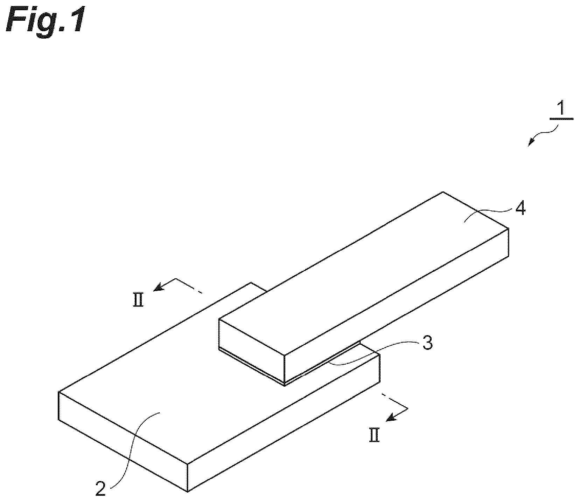

FIG. 1 is a perspective view illustrating a composite member 1 according to the embodiment. As illustrated in FIG. 1, the composite member 1 is a member including a plurality of members integrated by bonding. For example, the composite member 1 includes an aluminum member 2, a coating 3 bonded to the aluminum member 2, and a resin member 4 bonded to the coating 3. The aluminum member 2 is, for example, a plate member. The coating 3 is interposed between the aluminum member 2 and the resin member 4 and is in direct contact with the surfaces of the members. In FIG. 1, the resin member 4 is bonded to a part or the whole of the surface of the aluminum member 2 with the coating 3 interposed therebetween and has a lap joint structure. The material of the aluminum member 2 is, for example, A5052 or ADC12. The material is not limited thereto. The materials of the resin member 4 include resins such as polybutylene terephthalate, polyphenylene sulfide, polyamide, a liquid crystal polymer, polypropylene, and acrylonitrile-butadiene-styrene.

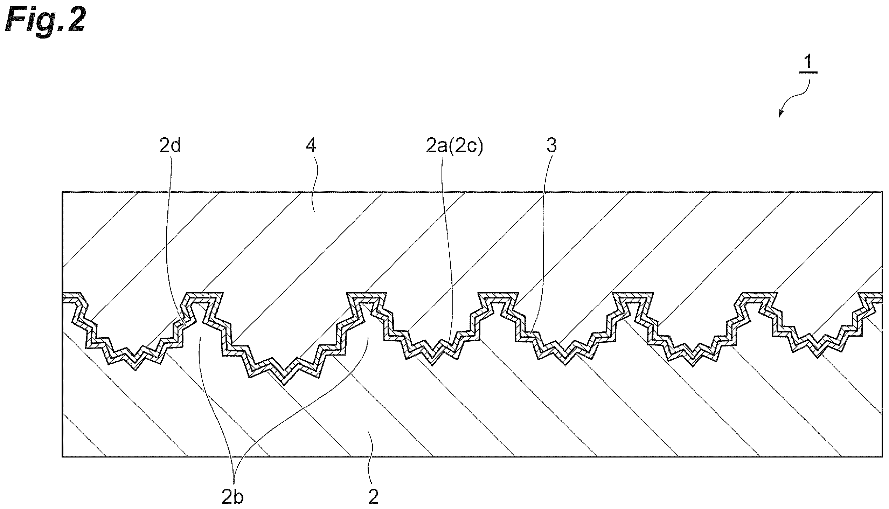

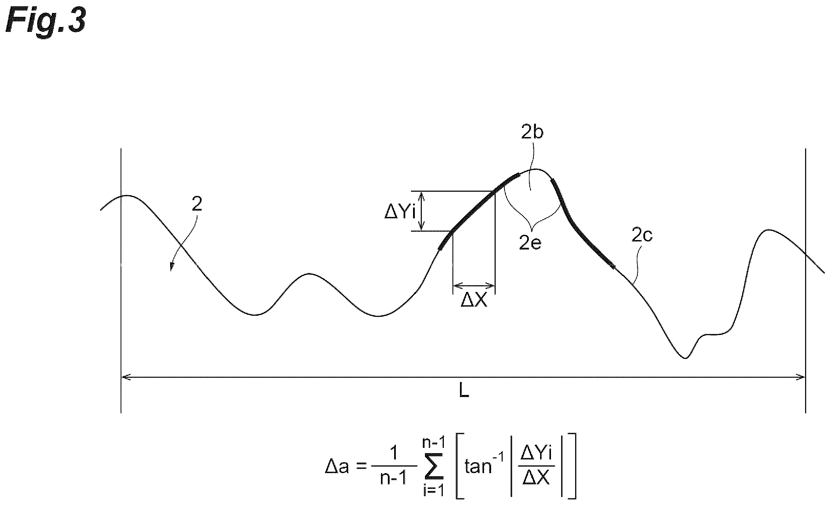

FIG. 2 is a cross-sectional view of the composite member 1 taken along line II-II of FIG. 1. As illustrated in FIG. 2, the aluminum member 2 has asperities 2b on a part of a surface 2a. Hereinafter, the surface 2a of the aluminum member 2 is the outermost surface layer of the aluminum member 2 regardless of the presence or absence of treatment and modifying on the surface. The surface 2a of the aluminum member 2 is also referred to as a surface 2c of the asperities 2b when the surface layer of the asperities 2b are particularly described. The asperities 2b are micro-order asperities. The micro-order asperities are asperities having a height difference of 1 µm or more and 1000 µm or less. FIG. 3 is a conceptual diagram illustrating the composite member of FIG. 2. As illustrated in FIG. 3, tilting portions 2e are formed on the asperities 2b in such a manner as to tilt from a projection to a recess of the asperities 2b. The tilting portions 2e contribute to bonding to the coating 3, which will be described later, and bonding to the resin member 4 and serve as stress concentrating portions that contribute to shearing strength. Arithmetic mean roughness Ra determined for the asperities 2b by JIS B 0601(1994) is 0.7 µm or more and 5.0 µm or less. An arithmetic mean inclination RΔa determined for the asperities 2b by JIS B 0601(1994) may be 0.17 or more and 0.50 or less as obtained by an arithmetic expression in FIG. 3. A root-mean-square inclination RΔq determined for the asperities 2b by JIS B 0601(1994) may be 0.27 or more and 0.60 or less. On the surface 2c of the asperities 2b, a modifying layer (e.g., a surface nano structure described later) of aluminum hydroxide, which will be described later, is formed. The resin member 4 is fixed into the asperities 2b and thus produces an anchor effect.

Referring to FIG. 2 again, the composite member will be described. On the asperities 2b of the aluminum member 2, a surface nano structure 2d is formed. The surface nano structure 2d is made of aluminum hydroxide. For example, on the surface 2c of the asperities 2b formed on the aluminum member 2, the surface nano structure 2d made of aluminum hydroxide is formed. In other words, the surface nano structure 2d is exposed on the surface 2a of the aluminum member 2. The surface nano structure 2d is a film that is made of aluminum hydroxide and is spongy (porous). The surface nano structure 2d has a plurality of pores with a pore size of 10 nm or more and less than 1000 nm. The surface nano structure 2d is 0.01 µm or more and 1 µm or less in thickness. The aluminum hydroxide is a hydroxide of aluminum and an aluminum compound having a hydroxyl group. The aluminum hydroxide formed on the surface 2a of the aluminum member 2 contains at least one of diaspore, boehmite, pseudo-boehmite, bayerite, norstrandite, gibbsite, and doyleite. The aluminum hydroxide formed on the surface 2a of the aluminum member 2 may be made of any one of diaspore, boehmite, pseudo-boehmite, bayerite, norstrandite, gibbsite, and doyleite. The aluminum hydroxide formed on the surface 2a of the aluminum member 2 may be made of a plurality of kinds of aluminum hydroxide selected from diaspore, boehmite, pseudo-boehmite, bayerite, norstrandite, gibbsite, and doyleite.

Between the aluminum member 2 and the coating 3, impurities other than elements serving as a material of the aluminum member 2 and a material of the coating 3 are removed. For example, the surface 2a of the aluminum member 2 is substantially phosphorus-free. In other words, if the surface nano structure 2d is subjected to chemical composition analysis by X-ray photoelectron spectroscopy, phosphorus falls below the detection limit of X-ray photoelectron spectroscopy and is not detected. If the aluminum member 2 is substantially magnesium-free and sodium-free, the surface 2a of the aluminum member 2 is substantially magnesium-free and sodium-free. In other words, if the surface 2a of the aluminum member 2 is subjected to chemical composition analysis by X-ray photoelectron spectroscopy, magnesium and sodium fall below the detection limit of X-ray photoelectron spectroscopy and are not detected. If pure water is used when the aluminum member 2 is modified into aluminum hydroxide, the surface 2a of the aluminum member 2 is substantially iron-free and calcium-free. In other words, if the surface 2a of the aluminum member 2 is subjected to chemical composition analysis by X-ray photoelectron spectroscopy, iron and calcium fall below the detection limit of X-ray photoelectron spectroscopy and are not detected.

The surface 2a of the aluminum member 2 is covered with the coating 3, the surface 2a being modified into aluminum hydroxide and having a surface nano structure. The coating 3 contains a triazine thiol derivative including at least one functional group selected from primary amine, secondary amine, tertiary amine, an epoxy group, a hydroxy group, a thiol group, an azido group, and an alkyl group. The coating 3 is formed with a composition including a triazine thiol derivative. The triazine thiol derivative is a compound obtained by changing a part of the structure of triazine thiol through substitution or other chemical reactions. Examples of the triazine thiol derivative contained in the coating 3 include 6-(3-(Triethoxysilyl)propylamino)-1,3,5-triazine-2,4-Dithiol-Monosodium Salt (TES), 6-(3-(Ethoxydimethylsilylpropylamino)-1,3,5-triazine-2,4-Dithiol-Monosodium (MES), and 6-bis(3-(Triethoxysilyl)propyl)amino-1,3,5-triazine-2,4-Dithiol-Monosodium (B-TES). The triazine thiol derivative contained in the coating 3 may be a derivative not containing silane. Specifically, the derivative may be 6-(4-vinylbenzyl-n-propyl)amino-1,3,5-triazine-2,4-dithiol, 1,3,5-triazine-2,4,6-trithiol, 6-dimethylamino-1,3,5-triazine-2,4-dithiol, 6-benzylamino-1,3,5-triazine-2,4-dithiol, 6-dibutylamino-1,3,5-triaxine-2,4-dithiol, 6-dioctylamino-1,3,5-triazine-2,4-dithiol, 6-didodecathylamino-1,3,5-triazine-2,4-dithiol, 6-diallylamino-1,3,5-triazine-2,4-dithiol, 6-dioleoylamino-1,3,5-triazine-2,4-dithiol, or a salt thereof.

The functional groups in the triazine thiol derivative of the coating 3 and aluminum hydroxide on the surface 2a of the aluminum member 2 form a chemical bond. The functional group in the triazine thiol derivative of the coating 3 is at least one functional group selected from primary amine, secondary amine, tertiary amine, an epoxy group, a hydroxy group, a thiol group, an azido group, and an alkyl group. The functional group of aluminum hydroxide on the surface of the aluminum member 2 is a hydroxy group. For example, if the triazine thiol derivative of the coating 3 is TES and a hydroxy group is present on the surface 2a of the aluminum member 2, an alkyl group contained in the TES and the hydroxy group on the surface 2a of the aluminum member 2 react with each other and form a chemical bond. Thus, the aluminum member 2 and the coating 3 are bonded to each other, and the surface 2a of the aluminum member 2, on which the asperities 2b and the surface nano structure 2d are formed, is covered with the coating 3. The coating 3 is bonded to the surface 2a of the aluminum member 2 while being partially placed into the asperities 2b on the surface 2a of the aluminum member 2 and the pores of the surface nano structure 2d.

The resin member 4 is bonded to the coating 3 while being partially placed into the asperities 2b on the surface 2a of the aluminum member 2 and the pores of the surface nano structure 2d. The triazine thiol derivative of the coating 3 and the functional group on the surface of the resin member 4 form a chemical bond. In this case, the functional group in the triazine thiol derivative of the coating 3 is, for example, a thiol group. The functional group in the resin member 4 is, for example, a hydrocarbon radical or a hydroxy group. For example, if the triazine thiol derivative of the coating 3 is TES, by a reaction (copolymerization) between the thiol group of TES and a hydrocarbon radical contained in the resin member 4, a carbon atom contained in the resin member 4 substitutes for a sulfur atom, and the coating 3 and the resin member 4 are bonded to each other. The resin member 4 is bonded to the aluminum member 2 by a chemical bond formed by the coating 3.

As described above, the composite member 1 according to the present embodiment has the micro-order asperities 2b partially on the surface 2a of the aluminum member 2 that is in contact with the resin member 4. Furthermore, the surface nano structure 2d is formed on the asperities 2b. The surface nano structure 2d is made of aluminum hydroxide. The surface nano structure 2d has a plurality of pores with a pore size of 10 nm or more and less than 1000 nm. The triazine thiol derivative contained in the coating 3 and the functional group of aluminum hydroxide on the surface 2a of the aluminum member 2 form a chemical bond, thereby bonding the coating 3 to the aluminum member 2. Thus, three effects are combined as follows: the formation of the coating 3 into the asperities 2b on the surface 2a of the aluminum member 2, the formation of the coating 3 into the surface nano structure 2d with a contact surface area extended between the aluminum member 2 and the coating 3 by the surface nano structure 2d on the surface layer of the asperities 2b, and molecular bonding between the functional group on the surface 2c of the asperities 2b and the triazine thiol derivative contained in the coating. An organic combination of these three configurations produces a synergy effect, which cannot be obtained by simply adding the effects of the individual configurations, achieving strong bonding. The resin member 4 is then bonded to the surface 2a of the aluminum member 2 with the coating 3 interposed therebetween. The resin member 4 is strongly bonded by molecular bonding between the functional group on the surface and the triazine thiol derivative contained in the coating 3. Also when the asperities 2b formed on the surface 2a of the aluminum member 2 have sharp portions, the sharp portions are rounded by forming the surface nano structure 2d (forming a film of aluminum hydroxide) and are strongly bonded to the coating 3 as described above. Thus, the composite member 1 achieves an additional effect of reducing the occurrence of breaks on the coating 3 and the resin member 4 from sharp portions. The surface nano structure 2d is formed on the tilting portions 2e, which serve as stress concentrating portions on the asperities 2b, to obtain an anchor effect and the chemical bonding forces are applied, thereby achieving higher bonding strength and higher airtightness. As described above, with a chemical bond by molecular bonding and a mechanical bond by an anchor effect in a large surface area, the composite member 1 is configured such that the aluminum member 2 and the resin member 4 are strongly and tightly bonded to each other with the coating 3 interposed therebetween. The tightly bonded composite member 1 has high airtightness and high thermal conductivity at a bonded interface, achieving high practicability. Thus, this composite member 1 can improve bonding strength and airtightness between the aluminum member 2 and the resin member 4. If airtightness is not obtained between the aluminum member and the resin member, for example, water enters between the aluminum member and the resin member from the outside and corrodes an interface, resulting in a large reduction in bonding strength and airtightness. If the composite member keeps only high bonding strength, the stability of the interface is obtained only after high airtightness is secured, resulting in no practical use for the composite member. In the composite member 1 of the present embodiment, high bonding strength and high airtightness are obtained by the anchor effect by the asperities 2b and the surface nano structure 2d and strong chemical bonding forces between the aluminum member 2 and the coating 3 and between the coating 3 and the resin member 4. Thus, high stability is kept at the interface between the aluminum member 2 and the resin member 4 in the composite member 1. Hence, the composite member 1 is practical and reliable and can be used for various purposes. For example, the composite member 1 is applicable to an apparatus requiring high airtightness and high thermal conductivity. For example, on a sealing portion between a resin terminal strip used for manufacturing semiconductors and an aluminum conductor, sealing is conventionally performed as retrofitting by using encapsulating resins such as an epoxy resin liquid, whereas by applying the composite member 1 of the present embodiment, high airtightness can be obtained and the heat dissipation and cooling of the aluminum conductor are facilitated.

In the composite member 1, the surface 2a of the aluminum member 2 is substantially phosphorus-free, and the aluminum hydroxide contains at least one of boehmite, pseudo-boehmite, diaspore, bayerite, norstrandite, gibbsite, and doyleite. Phosphorus is not left on the surface 2a of the aluminum member 2 and thus it is assumed that a functional group on the surface 2a of the aluminum member 2 and a triazine thiol derivative contained in the coating 3 are molecular bonded to each other while the functional group on the surface 2a of the aluminum member 2 is not deprived by these elements. Thus, this composite member 1 has a structure that improves bonding strength and airtightness between the aluminum member 2 and the resin member 4.

The triazine thiol derivative in the composite member 1 contains at least one functional group selected from primary amine, secondary amine, tertiary amine, an epoxy group, a hydroxy group, a thiol group, an azido group, and an alkyl group. In this case, in the composite member 1, the coating 3 is formed by binding the triazine thiol derivative and the functional group on the surface 2a of the aluminum member 2 made of aluminum hydroxide. Subsequently, the triazine thiol derivative contained in the coating 3 and the functional group on the surface of the resin member 4 bind to each other, and the resin member 4 is bonded to the surface of the aluminum member 2 on which the coating 3 is formed. In this way, the coating 3 is molecular bonded to the aluminum member 2 made of aluminum hydroxide and the resin member 4 by the functional group of the triazine thiol derivative, so that the coating 3 is strongly bonded.

In the composite member 1, the surface 2a of the aluminum member 2 is substantially magnesium-free and sodium-free. Magnesium and sodium are not left on the surface 2a of the aluminum member 2 and thus it is assumed that a functional group on the surface 2c of the aluminum member 2 and a triazine thiol derivative contained in the coating 3 are molecular bonded to each other while the functional group on the surface 2a of the aluminum member 2 is not deprived by these elements. Thus, this composite member 1 has a structure that improves bonding strength and airtightness between the aluminum member 2 and the resin member 4.

In the composite member 1, the surface 2a of the aluminum member 2 is substantially iron-free and calcium-free. Iron and calcium are not left on the surface 2a of the aluminum member 2 and thus it is assumed that a functional group on the surface 2a of the aluminum member 2 and a triazine thiol derivative contained in the coating 3 are molecular bonded to each other while the functional group on the surface 2a of the aluminum member 2 is not deprived by these elements. Thus, this composite member 1 has a structure that improves bonding strength and airtightness between the aluminum member 2 and the resin member 4.

In the composite member 1, an arithmetic mean inclination RΔa on the surface 2a of the aluminum member 2 bonded to the coating 3 is 0.17 or more and 0.50 or less. By using the aluminum member 2 having the surface 2a with an arithmetic mean inclination RΔa of 0.17 or more and 0.50 or less, the composite member 1 can increase the surface area of the aluminum member 2, thereby properly obtaining an anchor effect.

In the composite member 1, a root-mean-square inclination RΔq on the surface 2a of the aluminum member 2 bonded to the coating 3 is 0.27 or more and 0.60 or less. By using the aluminum member 2 having the surface 2a with a root-mean-square inclination RΔq of 0.27 or more and 0.60 or less, the composite member 1 can increase the surface area of the aluminum member 2, thereby properly obtaining an anchor effect.

### [Method of manufacturing the composite member]

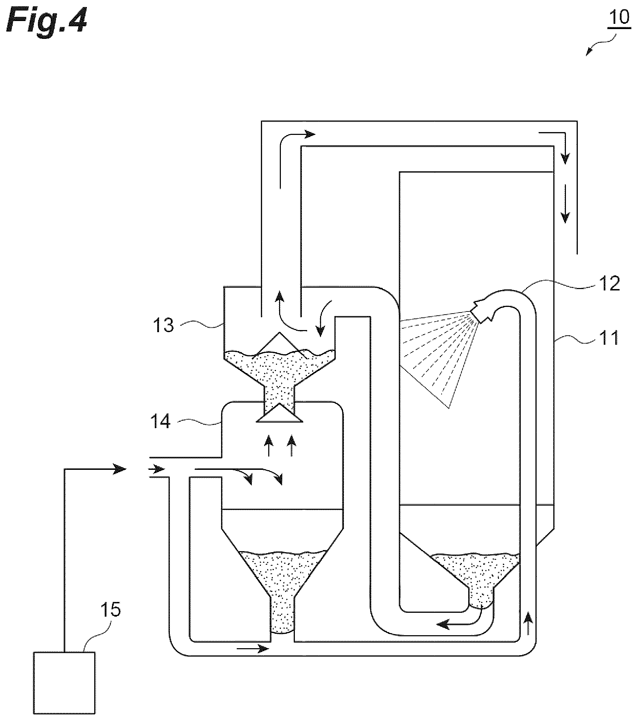

The outline of a machine used for the method of manufacturing the composite member 1 will be described below. The machine for blasting the surface 2a of the aluminum member 2 will be first discussed below. The blasting machine may be any type of a gravity (suction) air-blast machine, a straight-hydraulic (pressure) air-blast machine, and a centrifugal blasting machine. In the manufacturing method according to the present embodiment, a so-called straight-hydraulic (pressure) air-blast machine is used as an example. FIG. 4 is a conceptual diagram illustrating a blasting machine 10 used for the method of manufacturing the composite member 1. The blasting machine 10 includes a blast chamber 11, a blast nozzle 12, a storage tank 13, a pressure chamber 14, a compressed-air feeder 15, and a dust collector (not illustrated).

The blast nozzle 12 is stored in the blast chamber 11 and blasting is performed on a workpiece (aluminum member 2) in the blast chamber 11. A blasting material from the blast nozzle 12 fall with dust to the bottom of the blast chamber 11. The fallen blasting material is fed into the storage tank 13 and the dust is fed into the dust collector. The blasting material stored in the storage tank 13 is fed into the pressure chamber 14 and then the pressure chamber 14 is pressurized by the compressed-air feeder 15. The blasting material stored in the pressure chamber 14 is fed with compressed air into the blast nozzle 12. In this way, the workpiece undergoes blasting while the blasting material is circulated.

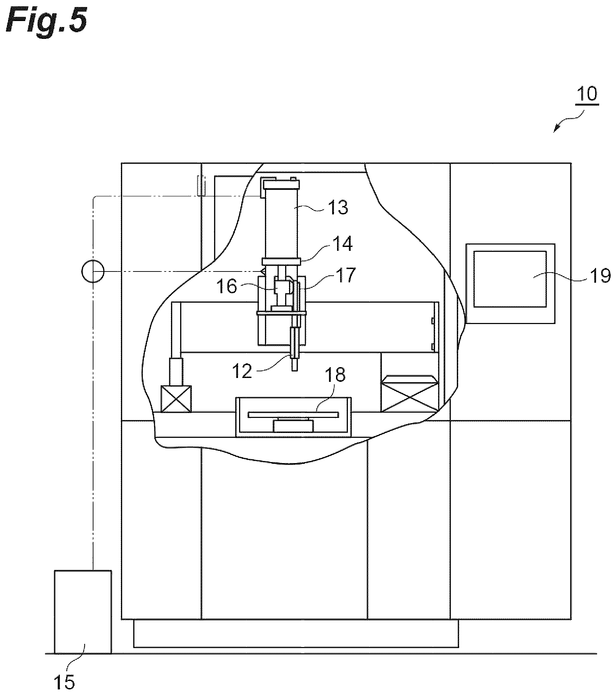

FIG. 5 is an explanatory drawing illustrating the configuration of the blasting machine 10 used for the method of manufacturing the composite member 1 according to the embodiment. The blasting machine 10 in FIG. 5 is the straight-hydraulic blasting machine illustrated in FIG. 4. In FIG. 5, the wall surface of the blast chamber 11 is partially omitted.

As illustrated in FIG. 5, the blasting machine 10 includes the blasting-material storage tank 13 and the pressure chamber 14 that are connected to the compressed-air feeder 15 and have sealed structures, a fixed-quantity feeding part 16 communicating with the storage tank 13 in the pressure chamber 14, the blast nozzle 12 communicating with the fixed-quantity feeding part 16 via a connecting pipe 17, a work table 18 that can move while holding a workpiece below the blast nozzle 12, and a control unit 19.

The control unit 19 controls the constituent elements of the blasting machine 10. The control unit 19 includes, for example, a display unit and a processing unit. The processing unit is a typical computer including a CPU and a storage unit. The control unit 19 controls a feed rate from the compressed-air feeder 15 that feeds compressed air to the storage tank 13 and the pressure chamber 14 based on a set projection pressure and a set blast velocity. Moreover, the control unit 19 controls the position of a blast from the blast nozzle 12 based on a distance between the set workpiece and the nozzle and the scanning conditions (including a speed, a feed pitch, and the number of scans) of the workpiece. As a specific example, the control unit 19 controls the position of the blast nozzle 12 by using a scanning speed (X direction) and a feed pitch (Y direction) that are set before blasting. The control unit 19 controls the position of the blast nozzle 12 by moving the work table 18 holding the workpiece.

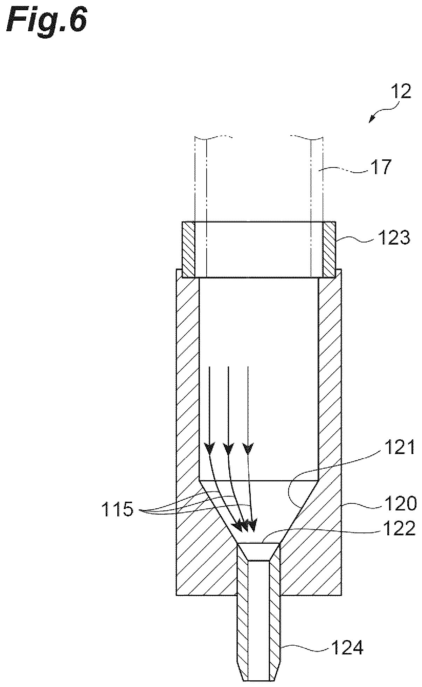

FIG. 6 is a cross-sectional view of the blast nozzle 12 illustrated in FIG. 5. The blast nozzle 12 has a blast-tube holder 120 serving as a body part. The blast-tube holder 120 is a cylindrical member having a space for passing the blasting material and compressed air therein. One end of the blast-tube holder 120 is a blasting-material inlet port 123 and the other end of the blast-tube holder 120 is a blasting-material outlet port 122. The blast-tube holder 120 includes a convergence acceleration part 121 that is conical with an angle of tilt, the convergence acceleration part 121 having an inner wall surface tapering from the blasting-material inlet port 123 toward the blasting-material outlet port 122. A cylindrical blast tube 124 communicates with the blasting-material outlet port 122 of the blast-tube holder 120. The convergence acceleration part 121 tapers from the midpoint of the cylindrical shape of the blast-tube holder 120 toward the blast tube 124. This forms a compressed airflow 115.

The connecting pipe 17 of the blasting machine 10 is connected to the blasting-material inlet port 123 of the blast nozzle 12. This forms a blasting material passage that sequentially connects the storage tank 13, the fixed-quantity feeding part 16 in the pressure chamber 14, the connecting pipe 17, and the blast nozzle 12.

In the blasting machine 10 configured thus, compressed air is fed from the compressed-air feeder 15 to the storage tank 13 and the pressure chamber 14 after the quantity of compressed air is controlled by the control unit 19. Subsequently, the blasting material in the storage tank 13 is quantitatively determined by the fixed-quantity feeding part 16 in the pressure chamber 14 with a constant pressure flow force, the blasting material is fed into the blast nozzle 12 through the connecting pipe 17, and then the blasting material is directed from the blast tube 124 of the blast nozzle 12 onto the work surface of the workpiece. Thus, a fixed quantity of the blasting material is always directed onto the work surface of the workpiece. Subsequently, the position of a blast directed from the blast nozzle 12 onto the work surface of the workpiece is controlled by the control unit 19 and then the workpiece undergoes blasting.

The directed blasting material and cut powder generated by blasting are sucked by the dust collector, which is not illustrated. On a passage from the blast chamber 11 to the dust collector, a classifier, which is not illustrated, is disposed to separate reusable blasting material and other fine powder (blasting material not in a reusable size or cut powder generated by blasting). The reusable blasting material is stored in the storage tank 13 and then are fed into the blast nozzle 12 again. The fine powder is collected by the dust collector.

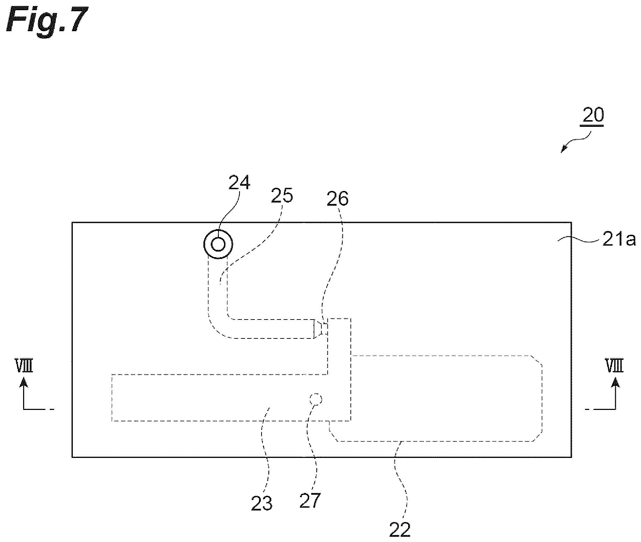

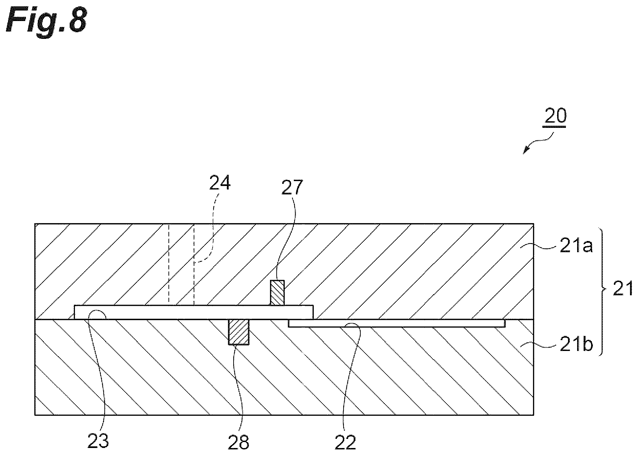

Injection molding will be described below. In this case, insert molding is used as injection molding. In insert molding, an insert is placed into a predetermined mold and then resin is injected and is cured after being retained for a predetermined period of time. Thereafter, the residual stress of the resin is removed by heat treatment. FIG. 7 is a top view of a mold used for injection molding; FIG. 8 is a cross-sectional view of the mold taken along line VIII-VIII of FIG. 7. As illustrated in FIGS. 7 and 8, a mold 20 includes a mold body 21 (a cope 21a and a drag 21b). Between the cope 21a and the drag 21b, a space 22 for placing the insert (in this configuration, the aluminum member 2) and a space 23 for injecting resin are provided. On the top surface of the cope 21a, a resin inlet is provided. The resin inlet communicates with the space 23 through a sprue 24, a runner 25, and a gate 26. A pressure sensor 27 and a temperature sensor 28 are provided in the space 23 and detect a pressure and a temperature in the space 23. Based on the detection results of the pressure sensor 27 and the temperature sensor 28, the parameters of a molding machine, which is not illustrated, are adjusted and then a molded article is manufactured. The parameters include a mold temperature, a temperature of resin being charged, a charging pressure, an injection rate, a retention time, a pressure during retention, a heat treatment temperature, and a heat treatment time. The article molded by the mold 20 has a lap joint structure that is joined with a predetermined area.

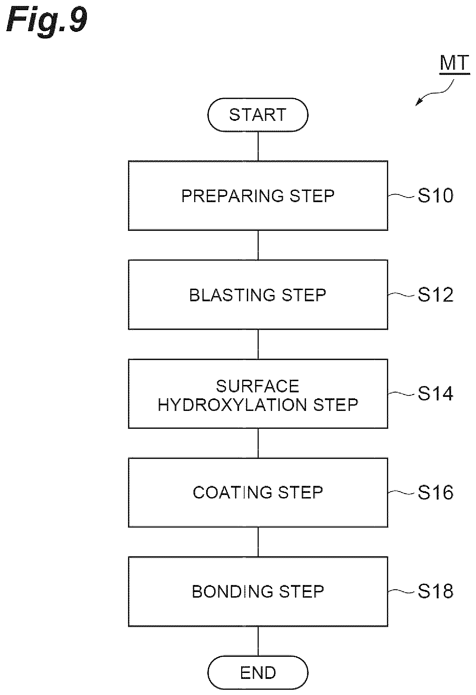

The flow of the method of manufacturing the composite member 1 will be described below. FIG. 9 is a flowchart of a method MT of manufacturing the composite member 1 according to the embodiment. As depicted in FIG. 9, first, predetermined blasting material is charged into the blasting machine 10 as a preparing step (S10). The particle size of the blasting material is, for example, 30 µm to 710 µm. The smaller the particle size of the blasting material is, the smaller mass of the blasting material is. This leads to a small inertial force. Thus, if the particle size of the blasting material is smaller than 30 µm, it is difficult to form the asperities 2b in desired shapes. Moreover, the aluminum member 2 to be industrially used is typically stored in the atmosphere and the surface of the aluminum member 2 is covered with an uneven aluminum natural oxide film having a thickness of 60 nm to 300 nm. Hence, surface etching using a chemical agent and surface laser beam machining may cause uneven surface treatment because of the aluminum natural oxide film. In order to uniformly modify the surface 2a of the aluminum member 2 in a surface hydroxylation step, which will be discussed later, the aluminum natural oxide film needs a thickness of about 30 nm or less. However, if the particle diameter of the blasting material exceeds 710 µm, it is difficult to grind the aluminum natural oxide film to a thickness of about 30 nm or less. Hence, the natural oxide formed on the surface 2a of the aluminum member 2 before performing a blasting step (S12) cannot be sufficiently removed. The blasting step will be discussed later. The asperities 2b can be formed and the aluminum natural oxide film can be removed if abrasive grains have a particle size of 30 µm to 710 µm. The material of the blasting material contains alumina. The blasting material has, for example, sharp projections.

The control unit 19 of the blasting machine 10 acquires blasting conditions as the preparing step (S10). The control unit 19 acquires the blasting conditions based on an operation by an operator or information stored in the storage unit. The blasting conditions include a projection pressure, a blast velocity, a distance between nozzles, and workpiece scanning conditions (a speed, a feed pitch, and the number of scans). The projection pressure is, for example, 0.5 MPa or more and 2.0 MPa or less. The lower the projection pressure, the smaller the inertial force. Thus, if the projection pressure is smaller than 0.5 MPa, it is difficult to form the asperities 2b in desired shapes. The higher the projection pressure, the larger the inertial force. Hence, the blasting material is likely to be crushed by a collision with the aluminum member 2. This leads to the following problems: (1) poor working efficiency caused by the dispersion of collision energy in a process other than the formation of the asperities 2b and (2) high cost because of considerable wear of the blasting material. Such problems become apparent when the projection pressure exceeds 2.0 MPa. The control unit 19 precisely performs micro-order or nano-order control on the size, depth, and density of the asperities 2b on the surface 2a of the aluminum member 2 by managing the blasting conditions. The blasting conditions may include a condition for specifying a blasting region. In this case, selective surface treatment is achieved.

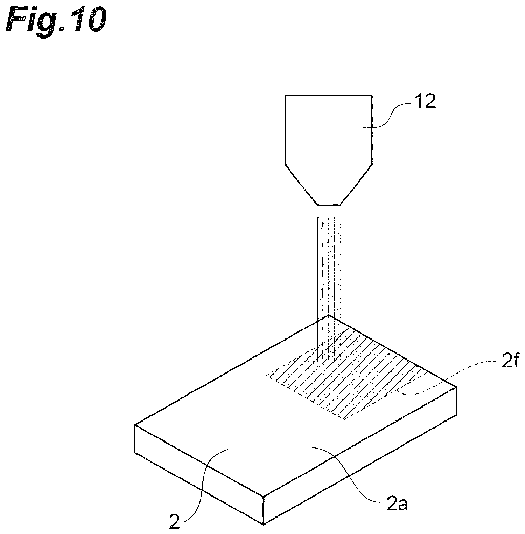

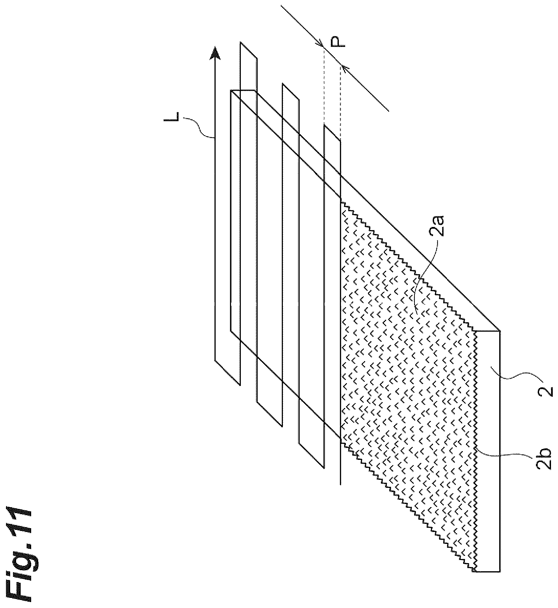

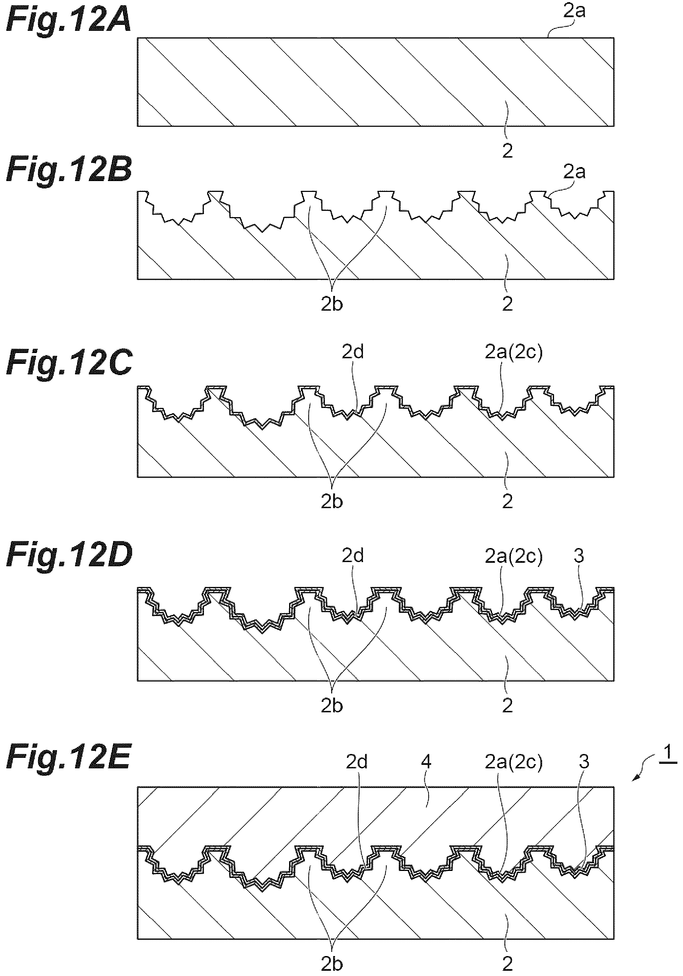

Subsequently, the blasting machine 10 performs a series of processing as the blasting step (S12) as follows: First, the aluminum member 2 as a target of blasting is set on the work table 18 in the blast chamber 11. The aluminum member 2 is substantially magnesium-free and sodium-free. The control unit 19 then activates the dust collector, which is not illustrated. The dust collector reduces a pressure in the blast chamber 11 to a negative pressure based on the control signal of the control unit 19. Thereafter, based on the control signal of the control unit 19, the blast nozzle 12 sends a blast of the blasting material as a solid/gas two-phase flow of compressed air at a projection pressure of 0.5 MPa or more and 2.0 MPa or less. The control unit 19 then activates the work table 18 and moves the aluminum member 2 into a blast flow of the solid/gas two-phase flow (below the blast nozzle in FIG. 5). FIG. 10 is a conceptual diagram of blasting. As illustrated in FIG. 10, the blasting material is injected from the blast nozzle 12 to a partial region 2f of the surface 2a of the aluminum member 2. At this point, the control unit 19 continuously activates the work table 18 such that a blast flow draws a predetermined path on the aluminum member 2. FIG. 11 is an explanatory drawing of a scan of blasting; As illustrated in FIG. 11, the control unit 19 operates the work table 18 according to a path L for scanning with the feed pitch P. FIGS. 12A-12E are explanatory drawings of the manufacturing process of the composite member; and as illustrated in FIG. 12A, the asperities 2b are not formed on the aluminum member 2 before blasting. By operating the work table 18, as illustrated in FIG. 12B, the desired micro-order asperities 2b are formed on the surface 2a of the aluminum member 2.

By blasting using the blasting material having a particle size of 30 µm or more and 710 µm or less at a projection pressure of 0.5 MPa or more and 2.0 MPa or less, the desired micro-order asperities 2b are formed on the surface 2a of the aluminum member 2. By blasting, the arithmetic mean roughness Ra determined for the asperities 2b by JIS B 0601(1994) is set at 0.7 µm or more and 5.0 µm or less. By blasting, the arithmetic mean inclination RΔa determined for the asperities 2b by JIS B 0601(1994) may be 0.17 or more and 0.50 or less. By blasting, the root-mean-square inclination RΔq determined for the asperities 2b by JIS B 0601(1994) may be set at 0.27 or more and 0.60 or less. Furthermore, the natural oxide film on the surface 2a of the aluminum member 2 has a thickness of, for example, about 9 nm or less. After the operation of the blasting machine 10 is stopped, the aluminum member 2 is removed and blasting is completed. As illustrated in FIG. 12B, the asperities 2b on the surface 2a of the aluminum member 2 have sharp projections after blasting.

Subsequently, as the surface hydroxylation step (S14), the surface 2a of the aluminum member 2 on which asperities 2b are formed is subjected to hydrothermal treatment, so that the surface 2c of the asperities 2b is modified into aluminum hydroxide and the surface nano structure 2d is formed on the surface 2c of the asperities 2b. In hydrothermal treatment in the surface hydroxylation step, the surface 2a of the aluminum member 2 and heated water are caused to react with each other. In hydrothermal treatment, the aluminum member 2 on which the asperities 2b are formed is immersed in pure water, which is heated to 70°C or more and 100°C or less, for a predetermined period. The electric conductivity of pure water used in the surface hydroxylation step (S14) is 0.054 µS/cm or more and 10 µS/cm or less. The pure water is substantially magnesium-free, sodium-free, and phosphorus-free. Furthermore, the pure water is substantially iron-free and calcium-free. In other words, magnesium, sodium, phosphorus, iron, and calcium in the pure water fall below the detection limit of X-ray photoelectron spectroscopy. Thus, the surface 2c of the asperities 2b is mainly modified into boehmite, thereby forming the surface nano structure 2d. By using the pure water, residual impurities other than aluminum hydroxide on the surface 2a of the aluminum member 2 can be reduced. In particular, magnesium, sodium, phosphorus, iron, and calcium are not left on the surface 2a of the aluminum member 2 and thus it is assumed that a functional group on the surface 2a of the aluminum member 2 and a triazine thiol derivative contained in the coating 3 are molecular bonded to each other while the functional group on the surface of the aluminum member 2 is not deprived by these elements. The aluminum hydroxide formed on the surface 2a of the aluminum member 2 is not limited to boehmite and may be made of any one of diaspore, pseudo-boehmite, bayerite, norstrandite, gibbsite, and doyleite. The aluminum hydroxide formed on the surface 2a of the aluminum member 2 may be made of a plurality of kinds of aluminum hydroxide selected from diaspore, boehmite, pseudo-boehmite, bayerite, norstrandite, gibbsite, and doyleite. As illustrated in FIG. 12C, the surface nano structure 2d is formed on the surface 2c of the asperities 2b. The surface nano structure 2d is a film that is made of aluminum hydroxide and is spongy (porous). The surface nano structure 2d has a plurality of pores with a pore size of 10 nm or more and less than 1000 nm. The surface nano structure 2d is 0.01 µm or more and 1 µm or less in thickness. Thus, the spongy (porous) surface nano structure 2d is formed on the sharp portions (sharp projections) of the asperities 2b formed by the blasting step (S12) and is modified into aluminum hydroxide, thereby achieving an additional effect of reducing the occurrence of breaks on the coating 3, which is placed into the asperities 2b, and the resin member 4 from the sharp portions. The coating 3 will be described later.

After the blasting step (S12), a natural oxide film peeled off by blasting or fine particles such as blasting material may be deposited on the surface 2a of the aluminum member 2. For example, fine particles may be adsorbed to the surface 2a of the aluminum member 2 by an electrostatic force of the aluminum member 2 or may be collided into the surface 2a of the aluminum member 2 by a blasting force of the blasting material in the blast nozzle 12. In this case, in the surface hydroxylation step (S14), the surface 2a of the aluminum member 2 may be cleaned with water. Thus, fine particles on the surface 2a of the aluminum member 2 are removed and a surface carbon concentration can be reduced. Hydrothermal treatment and ultrasonic cleaning may be combined to positively reduce the surface carbon concentration. In other words, in the hydrothermal treatment, the surface 2a of the aluminum member 2 is cleaned with water (pure water) and the surface 2a of the aluminum member 2 is modified into aluminum hydroxide. For example, pure water is irradiated with ultrasonic waves while the aluminum member 2 is immersed in pure water heated to 70°C or more and 100°C or less. This can simultaneously perform hydrothermal treatment and surface washing.

Thereafter, as a coating step (S16), a binder containing a triazine thiol derivative is applied to the surface 2c of the asperities 2b of the aluminum member 2, which has been modified into aluminum hydroxide and has the surface nano structure 2d, so that the coating 3 is formed by binding the triazine thiol derivative and a functional group on the surface 2a of the aluminum member 2 modified into aluminum hydroxide. As illustrated in FIG. 12D, the asperities 2b and the surface nano structure 2d on the surface 2a of the hydrothermally treated aluminum member 2 are coated with the coating 3. The triazine thiol derivative contains at least one functional group selected from primary amine, secondary amine, tertiary amine, an epoxy group, a hydroxy group, a thiol group, an azido group, and an alkyl group. In a coating step (S16), for example, immersion, spraying, or brush coating is performed such that the surface 2a of the aluminum member 2 and a binder containing a triazine thiol derivative react with each other.

First, the formation of the coating 3 by immersion will be described. The binder containing a triazine thiol derivative is liquid. In the immersion, the surface 2a of the aluminum member 2 modified into aluminum hydroxide is immersed in a liquid binder for a predetermined time. The triazine thiol derivative in the binder forms a chemical bond with a functional group (e.g., a hydroxyl group) on the surface 2a of the aluminum member 2. In this way, the liquid binder containing the triazine thiol derivative can form a chemical bond in contact with the surface 2a of the aluminum member 2, thereby forming the coating 3 on the surface 2a of the aluminum member 2.

The formation of the coating 3 by spraying will be described below. In the spraying, for example, a liquid binder containing a triazine thiol derivative is stored in a spray container. The spray container can spray the liquid binder. In the spraying, the liquid binder is sprayed through the spray container onto the surface 2a of the aluminum member 2 modified into aluminum hydroxide and is deposited on the surface 2a of the aluminum member 2. In this way, the liquid binder containing a triazine thiol derivative can be brought into contact with the surface 2a of the aluminum member 2, thereby forming the coating 3 on the surface 2a of the aluminum member 2.

The formation of the coating 3 by brush coating will be described below. In the brush coating, for example, a liquid binder containing a triazine thiol derivative is stored in a storage container, a brush is immersed into the storage container, and the liquid binder is applied to the brush. In the brush coating, the liquid binder is applied with the brush to the surface 2a of the aluminum member 2 modified into aluminum hydroxide and is deposited on the surface 2a of the aluminum member 2. In this way, the liquid binder containing a triazine thiol derivative can be brought into contact with the surface 2a of the aluminum member 2, thereby forming the coating 3 on the surface 2a of the aluminum member 2.

In the coating step (S16), ultrasonic cleaning may be performed with pure water after the coating 3 is formed by a reaction between the surface 2a of the aluminum member 2 and a binder containing a triazine thiol derivative. Thus, an unnecessary binder remaining around the coating 3 can be properly removed.

Subsequently, the molding machine, which is not illustrated, performs molding using the mold 20 as a bonding step (S18). The mold 20 is first opened, the aluminum member 2 having the coating 3 is placed into the space 22, and then the mold 20 is closed. The molding machine then injects dissolved resin, which has a set resin temperature, into the mold 20 from the resin inlet. The injected resin passes through the sprue 24, the runner 25, and the gate 26 and is charged into the space 23. The molding machine controls the charging pressure and the injection rate of resin based on the detection result of the pressure sensor 27. The molding machine controls a mold temperature to a set value based on the detection result of the temperature sensor 28. Moreover, the molding machine controls a pressure to the set value during a set retention time based on the detection result of the pressure sensor 27. Thereafter, the molding machine performs heat treatment based on a set heat-treatment temperature and a set heat-treatment time. At this point, as illustrated in FIG. 12E, the coating 3 and the resin member 4 are bonded to each other by copolymerization between a functional group (e.g., a thiol group, an azido group, and an amino group) contained in the coating 3 and the functional group of the resin member 4. The molding machine then opens the mold 20 and removes the composite member 1 in which the aluminum member 2, the coating 3, and the resin member 4 are integrated. At the end of the bonding step (S18), the flowchart in FIG. 9 is completed.

As described above, according to the manufacturing method MT of the composite member 1, blasting is performed on the surface 2a of the aluminum member 2. In the blasting step (S12), a natural oxide film formed on the surface 2a of the aluminum member 2 is reduced in thickness (removed) by blasting. The micro-order asperities 2b are formed on the surface 2a (a surface exposed by blasting) of the aluminum member 2 by blasting. By the surface hydroxylation step (S14), the surface 2a (the surface 2c of the asperities 2b) of the aluminum member 2 on which the asperities 2b are formed is modified into aluminum hydroxide, and the surface nano structure 2d is formed on the surface 2c of the asperities 2b. The surface nano structure 2d is made of aluminum hydroxide. By the modifying, a functional group (e.g., a hydroxy group) of aluminum hydroxide is applied to the asperities 2b of the aluminum member 2. In the coating step (S16), a binder containing a triazine thiol derivative is applied to the surface 2a of the aluminum member 2, so that the coating 3 is formed by binding the triazine thiol derivative and a functional group on the surface 2a (asperities 2b) of the aluminum member 2 modified into aluminum hydroxide. Thus, three effects are combined as follows: the formation of the coating 3 into the asperities 2b of the aluminum member 2, the formation of the coating 3 into the surface nano structure 2d with a contact surface area extended between the aluminum member 2 and the coating 3 by the surface nano structure 2d on the surface 2c of the asperities 2b, and molecular bonding between the functional group on the surface 2c of the asperities 2b and the triazine thiol derivative contained in the coating 3. An organic combination of these three configurations produces a synergy effect, which cannot be obtained by simply adding the effects of the individual configurations, achieving strong bonding. In a bonding step (S18), the resin member 4 is bonded to the surface of the aluminum member 2 on which the coating 3 is formed. The resin member 4 is strongly bonded by molecular bonding between the functional group on the surface and the triazine thiol derivative contained in the coating 3. Sharp portions on the asperities 2b formed by the blasting step (S12) are rounded by the surface hydroxylation step (S14) and are strongly bonded to the coating 3 as described above. Thus, the manufacturing method MT achieves an additional effect of reducing the occurrence of breaks on the coating 3 and the resin member 4 from sharp portions (sharp projections). As described above, with a chemical bond by molecular bonding and a mechanical bond by an anchor effect in a large surface area, the composite member 1 is manufactured such that the aluminum member 2 and the resin member 4 are strongly and tightly bonded to each other with the coating 3 interposed therebetween. The tightly bonded composite member 1 has high airtightness and high thermal conductivity at a bonded interface, achieving high practicability. Thus, according to the manufacturing method MT of the composite member 1, the composite member 1 can be manufactured with high bonding strength and airtightness. If airtightness is not obtained between the aluminum member and the resin member, for example, water enters between the aluminum member and the resin member from the outside and corrodes an interface, resulting in a large reduction in bonding strength and airtightness. If the composite member keeps only high bonding strength, the stability of the interface is obtained only after high airtightness is secured, resulting in no practical use for the composite member. In the composite member 1 of the present embodiment, high bonding strength and high airtightness are obtained by the anchor effect by the asperities 2b and the surface nano structure 2d and strong chemical bonding forces between the aluminum member 2 and the coating 3 and between the coating 3 and the resin member 4. Thus, high stability is kept at the interface between the aluminum member 2 and the resin member 4 in the composite member 1. Hence, the composite member 1 is practical and reliable and can be used for various purposes. For example, the composite member 1 is applicable to an apparatus requiring high airtightness and high thermal conductivity. For example, on a sealing portion between a resin terminal strip used for manufacturing semiconductors and an aluminum conductor, sealing is conventionally performed as retrofitting by using encapsulating resins such as an epoxy resin liquid, whereas by applying the composite member 1 of the present embodiment, high airtightness can be obtained and the heat dissipation and cooling of the aluminum conductor are facilitated.

In the manufacturing method MT, a plurality of pores having a pore size of 10 nm or more and less than 1000 nm are formed on the surface nano structure 2d, and the surface nano structure 2d has a thickness of 0.01 µm or more and 1 µm or less. In this case, the resin member 4 is applied into the plurality of pores formed on the surface nano structure 2d and is hardened therein, achieving an anchor effect. Thus, in this manufacturing method MT, the surface nano structure 2d is formed on the surface 2a of the aluminum member 2 by the surface hydroxylation step (S14), so that the aluminum member 2 can be changed to a shape including the coating 3 and the resin member 4 with higher adhesion than an aluminum member 2 having not been subjected to the surface hydroxylation step (S14).

According to the manufacturing method MT, in the blasting step (S12), blasting material having sharp projections with a particle size of 30 µm or more and 710 µm or less may be injected to blast with a projection pressure of 0.5 MPa or more and 2.0 MPa or less. Thus, in this manufacturing method MT, the asperities 2b can be formed on the surface 2a of the aluminum member 2 after the natural oxide film formed on the surface 2a of the aluminum member 2 is properly removed, thereby forming the uniform surface nano structure 2d on the surface 2a of the aluminum member 2 in the surface hydroxylation step (S14) and properly achieving an anchor effect. In this case, if spherical blasting material such as glass beads is used to perform blasting, asperities like dimples are formed on the surface 2a of the aluminum member 2. The asperities and the resin member 4 are hardly fit to each other, and the resin member 4 is difficult to lock onto the asperities, so that the composite member is formed and obtained with low bonding strength. By using the blasting material having sharp projections, the asperities 2b can be formed like spikes (sharp projections). The asperities 2b like spikes are formed on the surface 2a of the aluminum member 2, so that the resin member 4 is fit onto the asperities 2b. Thus, the resin member 4 fit onto the asperities 2b like spikes exhibits high bonding strength between the resin member 4 and the aluminum member 2.

According to the manufacturing method MT, in hydrothermal treatment in the surface hydroxylation step (S14), the hydrothermal treatment is performed on the surface 2a of the aluminum member 2 such that the surface 2a reacts with pure water at 70°C or more and 100C° or less. The surface of the aluminum member 2 can be modified by the foregoing treatment. If the aluminum member 2 is substantially magnesium-free and sodium-free, the interface (surface 2a) of the aluminum member 2 in the composite member 1 manufactured by the manufacturing method MT is substantially magnesium-free, sodium-free, and phosphorus-free.

According to the manufacturing method MT, the electric conductivity of pure water is 0.054 µS/cm or more and 10 µS/cm or less. Pure water with a low electric conductivity has a low impurity content. In the manufacturing method MT, residual impurities other than aluminum hydroxide on the surface 2a of the aluminum member 2 can be reduced by using pure water having the electric conductivity in the surface hydroxylation step (S14). The impurities are, for example, magnesium, sodium, phosphorus, iron, and calcium. Thus, the manufacturing method MT can prevent impurities from depriving a functional group on the surface 2a of the aluminum member 2, achieving strong molecular bonding.

According to the manufacturing method MT, in the surface hydroxylation step (S14), the surface 2a of the aluminum member 2 is cleaned with water, and the surface 2a of the aluminum member 2 is modified into aluminum hydroxide. When the surface 2a of the aluminum member 2 has organic contamination, the contamination reduces the wettability of the coating 3 and the resin member 4 and interferes with a chemical bond between the surface 2a of the aluminum member 2 and the coating 3 and the resin member 4. In the manufacturing method MT, the surface 2a of the aluminum member 2 is cleaned with water used for modification into aluminum hydroxide. Thus, the manufacturing method MT can suppress a reduction in bonding strength, the reduction being caused by organic contamination.

According to the manufacturing method MT, the aluminum hydroxide contains at least one of diaspore, boehmite, pseudo-boehmite, bayerite, norstrandite, gibbsite, and doyleite. The surface 2a (surface nano structure 2d) of the aluminum member 2, which contains a combination of multiple hydroxides of aluminum from among the foregoing hydroxides of aluminum, is formed such that water is heated at a lower temperature in the surface hydroxylation step (S14) than the surface nano structure 2d containing any one of the hydroxides of aluminum.

According to the manufacturing method MT, the triazine thiol derivative contains at least one functional group selected from primary amine, secondary amine, tertiary amine, an epoxy group, a hydroxy group, a thiol group, an azido group, and an alkyl group. In this case, in the coating step (S16), the coating 3 is formed by binding the triazine thiol derivative and the functional group on the surface 2a of the aluminum member 2 modified into aluminum hydroxide. Subsequently, in the bonding step (S18), the triazine thiol derivative contained in the coating 3 and the functional group on the surface of the resin member 4 bind to each other, and the resin member 4 is bonded to the surface 2a of the aluminum member 2 on which the coating 3 is formed. In this way, the coating 3 is molecular bonded to the aluminum member 2 modified into aluminum hydroxide and the resin member 4 by the functional group of the triazine thiol derivative, so that the coating 3 is strongly bonded.

According to the manufacturing method MT, in the bonding step (S18), the resin member 4 may be bonded to the surface 2a of the aluminum member 2 on which the coating 3 is formed by injection molding, thermal compression molding, press forming, or ultrasonic bonding. Thus, the manufacturing method MT can easily bond the resin member 4 to the surface 2a of the aluminum member 2 with the coating 3 interposed therebetween.

The present embodiment was described above. As a matter of course, the present disclosure is not limited to the present embodiment and can be modified in various forms other than the present embodiment without departing from the scope of the disclosure.

[Modification of the aluminum member and the resin member]

The aluminum member 2 and the resin member 4 were described as plate members in the embodiment. The shapes are not limited thereto, and any shapes can be used if the members can be brought into contact with each other. The resin member 4 according to the embodiment is in contact with a part of the surface 2a of the aluminum member 2. The resin member 4 may be brought into contact with the overall surface 2a of the aluminum member 2.

The material of the resin member is not limited to the foregoing example. For example, the material of the resin member may be thermoplastic fiber-reinforced resin or thermosetting fiber-reinforced resin. The thermoplastic fiber-reinforced resin includes, for example, aromatic polyamide fiber reinforced thermo plastics (AFRTP), carbon fiber reinforced thermo plastics (CFRTP), and glass fiber reinforced thermo plastics (GFRTP). The thermosetting fiber-reinforced resin includes, for example, aromatic polyamide fiber reinforced plastics (AFRP), carbon fiber reinforced plastics (CFRP), and glass fiber reinforced plastics (GFRP).

### [Modification of injection molding]

Injection molding is not limited to insert molding and outsert molding may be used instead.

### EXAMPLE

### [Grain size of the blasting material]

First, the thickness of the natural oxide film of the aluminum member 2 was measured before the blasting step (S12) was performed. The natural oxide film was analyzed in the depth direction by using "Auger electron spectroscopy (AES)". An oxide and a metal component were simultaneously detected around an oxide/metal interface and thus were separated by a spectral synthesis method, so that the thickness of the natural oxide film was determined. The natural oxide film was 72 nm in thickness. Subsequently, the blasting step (S12) was performed using the blasting machine illustrated in FIGS. 4 to 6 and then the thickness of the natural oxide film of the aluminum member 2 was measured. In the case of blasting material in which abrasive grains had a center particle size of 600 µm to 710 µm, a natural oxide film was 13 nm in thickness. In the case of blasting material in which abrasive grains had a center particle size of 41 µm to 50 µm (a maximum particle size of 127 µm or less and a mean particle size of 57 µm ±3 µm), a natural oxide film was 9 nm in thickness. Thus, it was confirmed that the natural oxide film of the surface 2a of the aluminum member 2 can be removed by using at least the blasting material of 710 µm or less.

### [Confirmation of a surface state of the aluminum member]

The blasting step (S12) was performed by using the blasting machine illustrated in FIGS. 4 to 6. An aluminum plate (Japanese Industrial Standards (JIS): A5052) was used as the aluminum member. The blasting material containing alumina with a blasting-material center particle size of 106 µm to 125 µm was used for blasting. The projection pressure was 1.0 MPa. After the blasting step, the surface was observed using a field emission scanning electron microscope (FE-SEM).

Subsequently, the surface hydroxylation step (S14) was performed. The aluminum member having undergone blasting was immersed in pure water at 90°C for two minutes. The surface was then observed by using the field emission scanning electron microscope (FE-SEM). Thus, it was confirmed that a plurality of pores with a pore size of 10 nm or more and less than 1000 nm are present on the surface of the aluminum member after the surface hydroxylation step (S14).

### [Confirmation of the surface composition of the aluminum member]

### [Example: surface treated article]

The blasting step (S12) was performed by using the blasting machine illustrated in FIGS. 4 to 6. An aluminum plate (JIS: A5052) was used as the aluminum member. The blasting material containing alumina with a blasting-material center particle size of 106 µm to 125 µm was used for blasting. The projection pressure was 1.0 MPa. Subsequently, the surface hydroxylation step (S14) was performed. The aluminum member having undergone blasting was immersed in pure water at 90°C for two minutes.

### [Comparative example: untreated article]

The blasting step (S12) and the surface hydroxylation step (S14) were not performed on an aluminum plate (JIS: A5052).

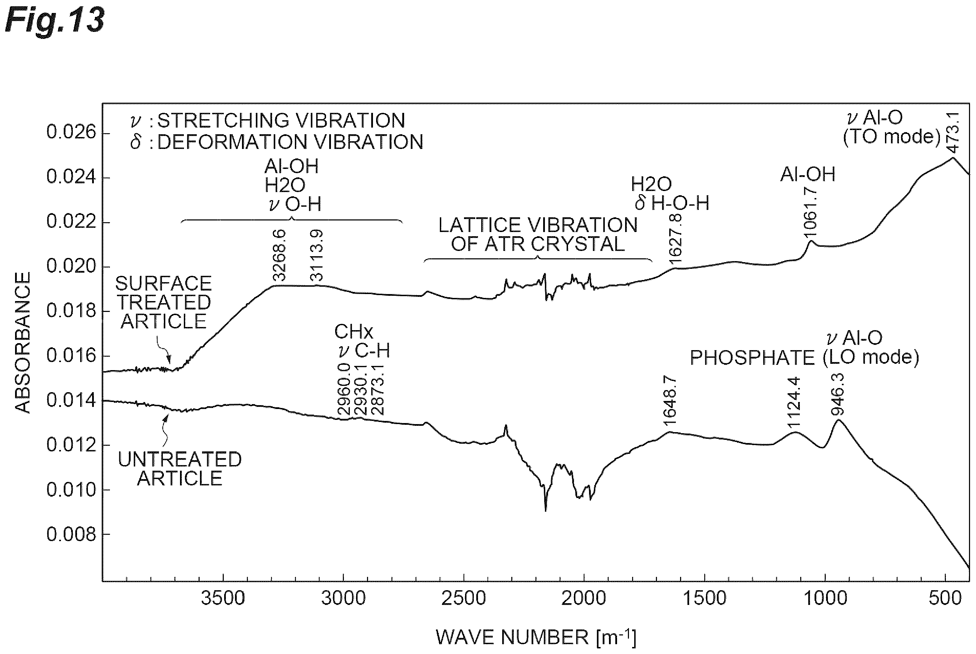

The surface compositions of the surface treated article and the untreated article were analyzed using Fourier transform infrared spectroscopy (FT-IR) according to attenuated total reflectance (ATR). The analysis results are indicated in FIG. 13.

FIG. 13 indicates the analysis results of the surface compositions of the aluminum members. In the graph of FIG. 13, the abscissa indicates a wave number and the ordinate indicates an absorbance. Waveform data in the upper part of the graph indicates the composition analysis result of the surface treated article, whereas waveform data in the lower part of the graph indicates the composition analysis result of the untreated article. As indicated in FIG. 13, the waveform data of the untreated article reached peaks at wave numbers of 3960 m-1, 3930 m⁻1, and 2873 m-1 because of contamination with carbon (e.g., C-H) and a peak (Al-O) at a wave number of 946 m-1 because of an aluminum oxide. Any peak caused by boehmite was not confirmed. In the data of the surface treated article, a peak caused by contamination with carbon (e.g., C-H) before treatment and a peak caused by an aluminum oxide (Al-O) disappeared and peaks caused by boehmite appeared at wave numbers of 3268 m-1 and 3113 m-1. Hence, it was confirmed that organic contamination with on the surface of the aluminum member was removed by surface treatment and aluminum hydroxide was formed.

### [Confirmation of a surface carbon concentration]

The surface carbon concentration of the aluminum member 2 having undergone the surface hydroxylation step (S14) and the surface carbon concentration of the untreated article were measured and compared with each other. For the measurement, X-ray photoelectron spectroscopy (XPS) was used. Consequently, the surface carbon concentration of the untreated article was 40 at%, whereas the aluminum member 2 having undergone the surface hydroxylation step (S14) had a surface carbon concentration of 8 at%. Thus, a cleaning effect was confirmed as a secondary effect of hydrothermal treatment.

### [Confirmation of shearing strength]

Example 1 and comparative examples 1 to 4 were prepared to confirm shearing strength.

### [Example 1]

The blasting step (S12) was performed by using the blasting machine illustrated in FIGS. 4 to 6. An aluminum plate (JIS: ADC12) was used as the aluminum member. The blasting material containing alumina having sharp projections with a blasting-material center particle size of 106 µm to 125 µm was used for blasting. The projection pressure was 1.0 MPa. At this point, asperities are formed on the surface of the aluminum member such that arithmetic mean roughness Ra, arithmetic mean inclination RΔa, and root-mean-square inclination RΔq that are determined by JIS B 0601(1994) are 2.5 µm, 0.35, and 0.42, respectively. Subsequently, hydrothermal treatment in the surface hydroxylation step (S14) was performed. The aluminum member having undergone blasting was immersed in pure water at 90°C for two minutes. For the hydrothermal treatment, pure water having an electric conductivity of 0.05 µS/cm was used. The pure water was ion exchanged water. Thereafter, immersion in the coating step (S16) was performed. The aluminum member having undergone the surface hydroxylation step was immersed in a molecule binder for one minute. For the coating, a-TES (triazine molecule binder 0.1% solution) by Sulfur Chemical Laboratory Inc. was used as a molecule binder. After the coating, ultrasonic cleaning was performed with pure water for one minute. Thereafter, the bonding step (S18) was performed. By using the mold illustrated in FIGS. 7 and 8, the resin member was bonded to the aluminum member by injection molding. Polyphenylene sulfide (PPS) was used as the material of the resin member. During injection, a mold temperature was 150°C, an injection rate was 20 mm/s, an injection pressure was 53 MPa or more and 93 MPa or less, and an injection time was 0.56 s. During the retention time, the retention pressure was set at 80 MPa and the retention time was set at 8 s. In a test specimen of shearing strength, the area of a bonded portion between the aluminum member and the resin member measured 5 mm × 10 mm, 50 mm². In a test specimen of airtightness, the aluminum member was formed with an inside diameter of 20 mm. The resin member was bonded to the aluminum member under the foregoing conditions and had an outside diameter of 24 mm. The bonded portion between the aluminum member and the resin member was 2 mm in width.

### [Example 2]

In example 2, an aluminum plate (JIS: A5052) was used as the aluminum member. Other conditions, the blasting step (S12), the surface hydroxylation step (S14), the coating step (S16), and the bonding step (S18) are identical to those of example 1.

### [Example 3]

In example 3, an aluminum plate (JIS:ADC12) having undergone the blasting step (S12), the surface hydroxylation step (S14), and the coating step (S16) as in example 1 was used as an aluminum member. In the bonding step (S18), carbon fiber reinforced thermo plastics (CFRTP) acting as fiber-reinforced resin were used as the resin member. In the bonding step (S18), the resin member was bonded to the surface of the aluminum member on which the coating is formed by press forming instead of injection molding. During the retention time of the press forming (the closing of the mold), the mold temperature was set at 220°C, the retention pressure was set at 5 MPa and the retention time was set at 300 s. The conditions of a test specimen of shearing strength and a test specimen of airtightness are identical to those of example 1.

### [Comparative Example 1]

In comparative example 1, an aluminum plate (JIS:ADC12) having undergone the same blasting step (S12) as in example 1 was used as an aluminum member. Unlike in the surface hydroxylation step of example 1, the aluminum member having undergone blasting in hydrothermal treatment was immersed in pure water at 90°C for two minutes. Ordinary tap water containing metal ions was used for the hydrothermal treatment. The coating step (S16) and the bonding step (S18) were performed as in example 1.

### [Comparative Example 2]

In comparative example 2, an aluminum plate (JIS:A5052) having undergone the same blasting step (S12) as in example 2 was used as an aluminum member. Unlike in the surface hydroxylation step of example 2, the aluminum member having undergone blasting in hydrothermal treatment was immersed in pure water at 90°C for two minutes. Ordinary tap water containing metal ions was used for the hydrothermal treatment. The coating step (S16) and the bonding step (S18) were performed as in examples 1 and 2.

### [Comparative Example 3]

In comparative example 3, the same aluminum plate (JIS:ADC12) as in example 1 was used as an aluminum member. The blasting step was performed by using the blasting machine illustrated in FIGS. 4 to 6. The blasting material containing alumina not having sharp projections with a blasting-material center particle size of 106 µm to 125 µm was used for blasting. The projection pressure was 1.0 MPa. At this point, asperities are formed on the surface of the aluminum member such that arithmetic mean roughness Ra, arithmetic mean inclination RΔa, and root-mean-square inclination RΔq that are determined by JIS B 0601(1994) are 2.5 µm, 0.16, and 0.42, respectively. The surface hydroxylation step (S14), the coating step (S16), and the bonding step (S18) were performed as in example 1.

### [Comparative Example 4]

In comparative example 4, the same aluminum plate (JIS:ADC12) as in example 1 was used as an aluminum member. The blasting step was performed by using the blasting machine illustrated in FIGS. 4 to 6. The blasting material containing glass beads with a blasting-material center particle size of 106 µm to 125 µm was used for blasting. The projection pressure was 1.0 MPa. At this point, asperities are formed on the surface of the aluminum member such that arithmetic mean roughness Ra, arithmetic mean inclination RΔa, and root-mean-square inclination RΔq that are determined by JIS B 0601(1994) are 2.5 µm, 0.15, and 0.20, respectively. The surface hydroxylation step (S14), the coating step (S16), and the bonding step (S18) were performed as in example 1.

### [Comparative Example 5]

In comparative example 5, an aluminum plate (JIS:A5052) having undergone the same surface hydroxylation step (S14) as in example 1 was used as an aluminum member without undergoing the blasting step (S12). The coating step (S16) and the bonding step (S18) were performed as in example 1.

### [Evaluation of bonding strength]

The shearing strengths of examples 1 to 3 and comparative examples 1 to 5 prepared under the foregoing conditions were measured. An evaluation apparatus conducted measurements according to a testing method in conformity with ISO19095-2 (overlapped test specimens (type B)). The shearing strength of example 1 was 42 MPa, the shearing strength of example 2 was 44 MPa, the shearing strength of example 3 was 37 MPa, the shearing strength of comparative example 1 was 8 MPa, the shearing strength of comparative example 2 was 6 MPa, and the shearing strength of comparative example 3 was 10 MPa. In comparative example 4 and comparative example 5, the aluminum member and the resin member were not bonded to each other, so that shearing strength was unmeasurable.

By a comparison between example 1 and comparative example 1 and a comparison between example 2 and comparative example 2, it was confirmed that pure water used as water in the hydrothermal treatment of the surface hydroxylation step (S14) contributes more greatly to the improvement of shearing strength. In the case of pure water, only a few impurities (e.g., magnesium, sodium, phosphorus, and calcium) are contained in water, so that the functional group (hydroxyl group) of aluminum hydroxide formed on the surface of the aluminum member by the impurities is not deprived. Thus, it is assumed that more hydroxyl groups of aluminum hydroxide formed on the surface of the aluminum member and the functional group of a triazine thiol derivative can react with each other and thus shearing strength is improved between the aluminum member and the coating, achieving higher shearing strength for the composite member.

By comparing examples 1 and 2 with example 3, it was confirmed that injection molding performed as the bonding step (S18) contributes more greatly to the improvement of shearing strength. Although fiber-reinforced resin is used in example 3, the shearing strength is lower than in examples 1 and 2 in which fiber-reinforced resin is not used. This is because fiber-reinforced resin improves shock absorption but does not greatly contribute to shearing strength between the aluminum member and the resin member. Furthermore, it is assumed that injection molding can more properly bond the aluminum member and the resin member than press forming.

By comparing example 1 with comparative example 3 and comparing example 1 with comparative example 4, it was confirmed that the formation of asperities in the blasting step (S12) contributes greatly to the improvement of shearing strength with an arithmetic mean inclination RΔa controlled to 0.17 or more and 0.50 or less and a root-mean-square inclination RΔq controlled to 0.27 or more and 0.60 or less on the surface of the aluminum member. It was confirmed that shearing strength considerably decreases if the arithmetic mean inclination RΔa and the root-mean-square inclination RΔq have values outside the range even when the arithmetic mean roughness Ra has a constant value. The resin member can be placed onto sharp-angled asperities formed by blasting, and the asperities and the resin member placed on the asperities interfere with each other and are not broken by a force applied from the outside. Thus, it is assumed that example 1 achieves higher shearing strength than comparative examples 3 and 4.

By comparing comparative example 3 and comparative example 4, it was confirmed that alumina serving as blasting material has a larger arithmetic mean inclination RΔa and a larger root-mean-square inclination RΔq than glass beads serving as blasting material, contributing to the proper formation of the composite member. In the case of alumina serving as blasting material, asperities are formed like spikes on the surface of the aluminum member, whereas in the case of glass beads serving as blasting material, asperities are formed like dimples on the surface of the aluminum member. Thus, alumina serving as blasting material is more likely to produce an anchor effect between the aluminum member and the coating and between the aluminum member and the resin member than glass beads serving as blasting material, so that the composite member was properly formed (the aluminum member and the resin member are bonded to each other).

By comparing example 1 and comparative example 5 and comparing comparative example 3 and comparative example 5, it was confirmed that the blasting step (S12) contributes to the proper formation of the composite member. In other words, it was confirmed that the composite member is not properly formed even if only the surface hydroxylation step (S14), the coating step (S16), and the bonding step (S18) are properly performed.

### [Evaluation of airtightness]

The airtightness of examples 1 to 3 and comparative examples 1 to 5 prepared under the foregoing conditions was measured. An evaluation apparatus measured the degree of leak of helium (He) according to a testing method in conformity with ISO19095-2 (overlapped test specimens for sealing properties (type D)). The airtightness (the leak rate of helium) of examples 1 to 3 was less than 5.0 × 10⁻⁷ Pa·m³/s, whereas the airtightness (the leak rate of helium) of comparative examples 1 to 3 was 5.0 × 10⁻⁵ Pa·m³/s or more. In comparative example 4 and comparative example 5, the aluminum member and the resin member were not bonded to each other, so that airtightness (the leak rate of helium) was unmeasurable.

By comparison between example 1 and comparative example 1 and a comparison between example 2 and comparative example 2, it was confirmed that pure water used as water in the hydrothermal treatment of the surface hydroxylation step (S14) contributes more greatly to the improvement of airtightness. In the case of pure water, only a few impurities (e.g., magnesium, sodium, phosphorus, iron and calcium) are contained in water, so that the functional group (hydroxyl group) of aluminum hydroxide formed on the surface of the aluminum member by the impurities is not deprived. Thus, it is assumed that more hydroxyl groups of aluminum hydroxide formed on the surface of the aluminum member and the functional group of a triazine thiol derivative can react with each other and thus the aluminum member and the coating can be more tightly bonded to each other, achieving higher airtightness for the composite member.

By comparing example 1 with comparative example 3 and comparing example 1 with comparative example 4, it was confirmed that the formation of asperities in the blasting step (S12) contributes greatly to the improvement of airtightness with an arithmetic mean inclination RΔa controlled to 0.17 or more and 0.50 or less and a root-mean-square inclination RΔq controlled to 0.27 or more and 0.60 or less on the surface of the aluminum member. It was confirmed that airtightness considerably decreases if the arithmetic mean inclination RΔa and the root-mean-square inclination RΔq have values outside the range even when the arithmetic mean roughness Ra has a constant value. The resin member can be placed onto sharp-angled asperities formed by blasting, and the asperities and the resin member placed on the asperities are tightly engaged with each other. Thus, it is assumed that example 1 achieves higher airtightness than comparative examples 3 and 4.

### Reference Signs List

1 ... composite member, 2 ... aluminum member, 2a,2c ... surface, 2b ... asperities, 2d ... surface nano structure, 3 ... coating, 4 ... resin member, 10 ... blasting machine, 11 ... blast chamber, 12 ... blast nozzle, 13 ... storage tank, 14 ... pressure chamber, 15 ... compressed-air feeder, 16 ... fixed-quantity feeding part, 17 ... connecting pipe, 18 ... work table, 19 ... control unit, 20 ... mold, 21 ... mold body

## Claims

1. A method of manufacturing a composite member (1) including an aluminum member (2) and a resin member (4) that are bonded to each other,
the method comprising:
blasting on a surface (2a) of the aluminum member (2) to form asperities (2b) on the surface (2a) of the aluminum member (2);
performing hydrothermal treatment on the surface (2a) of the aluminum member (2) having the asperities (2b) to modify a surface (2c) of the asperities (2b) into aluminum hydroxide and form a surface nano structure (2d) on the surface of the asperities (2b);
applying a binder containing a triazine thiol derivative to the surface (2c) of the asperities (2b) of the aluminum member (2) modified into aluminum hydroxide and having the surface nano structure (2d) to form a coating (3) to be bonded to the aluminum member (2); and
bonding the coating (3) and the resin member (4),
wherein the blasting material contains alumina.

2. The method of manufacturing a composite member (1) according to claim 1, wherein the surface nano structure (2d) has a plurality of pores having a pore size of 10 nm or more and less than 1000 nm, as determined using a field emission scanning electron microscope, and
the surface nano structure (2d) is 0.01 µm or more and 1 µm or less in thickness.

3. The method of manufacturing a composite member according to claim 1 or 2, wherein in the blasting, abrasive grains having sharp projections with a particle size of 30 µm or more and 710 µm or less are injected to blast with a projection pressure of 0.5 MPa or more and 2.0 MPa or less.

4. The method of manufacturing a composite member (1) according to any one of claims 1 to 3, wherein in the hydrothermal treatment in the performing, the hydrothermal treatment is performed on the surface (2a) of the aluminum member (2) such that the surface (2a) reacts with pure water at 70°C or more and 100C° or less.

5. The method of manufacturing a composite member (1) according to claim 4, wherein the pure water has an electric conductivity of 0.054 µS/cm or more and 10 µS/cm or less.

6. The method of manufacturing a composite member (1) according to any one of claims 1 to 5, wherein in the performing, the surface (2a) of the aluminum member (2) is cleaned with water, and the surface (2a) of the aluminum member (2) is modified into aluminum hydroxide.

7. The method of manufacturing a composite member (1) according to any one of claims 1 to 6, wherein the aluminum hydroxide contains at least one selected from the group consisting of diaspore, boehmite, pseudo-boehmite, bayerite, norstrandite, gibbsite, and doyleite.

8. The method of manufacturing a composite member (1) according to any one of claims 1 to 7, wherein the triazine thiol derivative contains at least one functional group selected from the group consisting of primary amine, secondary amine, tertiary amine, an epoxy group, a hydroxy group, a thiol group, an azido group, and an alkyl group.

9. The method of manufacturing a composite member (1) according to any one of claims 1 to 8, wherein in the bonding, the resin member (4) is bonded to the surface (2a) of the aluminum member (2) on which the coating (3) is formed by injection molding, thermal compression molding, press forming, or ultrasonic bonding.

10. A composite member (1) comprising:
an aluminum member (2) having asperities (2b) on a surface (2a) of the aluminum member (2);
a coating (3) containing a triazine thiol derivative and being bonded to the surface (2a) of the aluminum member (2); and
a resin member (4) bonded to the coating (3),
wherein a surface nano structure (2d) is formed on the asperities (2b), and the surface nano structure (2d) is made of aluminum hydroxide, and **characterised in that** the asperities (2b) are formed like spikes on the surface (2a) of the aluminum member (2), and
arithmetic mean roughness determined for the asperities (2b) by JIS B 0601(1994) is 0.7 µm or more and 5.0 µm or less.

11. The composite member (1) according to claim 10, wherein the surface (2a) of the aluminum member (2) is substantially phosphorus-free,
the aluminum hydroxide contains at least one selected from the group consisting of boehmite, pseudo-boehmite, diaspore, bayerite, norstrandite, gibbsite, and doyleite, and
phosphorus falls below the detection limit of X-ray photoelectron spectroscopy and is not detected, if the surface nano structure (2d) is subjected to chemical composition analysis by X-ray photoelectron spectroscopy.

12. The composite member (1) according to claim 10 or 11, wherein the triazine thiol derivative contains at least one functional group selected from the group consisting of primary amine, secondary amine, tertiary amine, an epoxy group, a hydroxy group, a thiol group, an azido group, and an alkyl group.

13. The composite member (1) according to any one of claims 10 to 12, wherein the surface (2a) of the aluminum member (2) is substantially magnesium-free and sodium-free, and
magnesium and sodium fall below the detection limit of X-ray photoelectron spectroscopy and is not detected, if the surface nano structure is subjected to chemical composition analysis by X-ray photoelectron spectroscopy.

14. The composite member (1) according to any one of claims 10 to 13, wherein the surface (2a) of the aluminum member (2) is substantially iron-free and calcium-free, and
iron and calcium fall below the detection limit of X-ray photoelectron spectroscopy and is not detected, if the surface nano structure (2d) is subjected to chemical composition analysis by X-ray photoelectron spectroscopy.

15. The composite member (1) according to any one of claims 10 to 14, wherein an arithmetic mean inclination determined by JIS B 0601(1994) on the surface (2a) of the aluminum member (2) bonded to the coating (3) is 0.17 or more and 0.50 or less.

16. The composite member (1) according to any one of claims 10 to 15, wherein a root-mean-square inclination determined by JIS B 0601(1994) on the surface (2a) of the aluminum member (2) bonded to the coating is 0.27 or more and 0.60 or less.

## Patentansprüche

1. Verfahren zur Herstellung eines Verbundelements (1), umfassend ein Aluminiumelement (2) und ein Harzelement (4), die miteinander verbunden sind,
wobei das Verfahren umfasst:
das Strahlen einer Oberfläche (2a) des Aluminiumelements (2), um Unebenheiten (2b) auf der Oberfläche (2a) des Aluminiumelements (2) zu bilden;
das Durchführen einer hydrothermalen Behandlung an der Oberfläche (2a) des Aluminiumelements (2) mit den Unebenheiten (2b), um eine Oberfläche (2c) der Unebenheiten (2b) zu Aluminiumhydroxid zu modifizieren und eine Oberflächen-Nanostruktur (2d) an der Oberfläche der Unebenheiten (2b) zu bilden;
das Aufbringen eines Bindemittels, enthaltend ein Triazin-Thiol-Derivat, auf die Oberfläche (2c) der Unebenheiten (2b) des Aluminiumelements (2), die zu Aluminiumhydroxid modifiziert wurde und die Oberflächen-Nanostruktur (2d) aufweist, um eine Beschichtung (3), die mit dem Aluminiumelement (2) verbunden werden soll, zu bilden; und
das Verbinden der Beschichtung (3) und des Harzelements (4),
wobei das Strahlmaterial Aluminiumoxid enthält.

2. Verfahren zur Herstellung eines Verbundelements (1) gemäß Anspruch 1, wobei die Oberflächen-Nanostruktur (2d) eine Mehrzahl von Poren mit einer Porengröße von 10 nm oder mehr und weniger als 1000 nm, bestimmt unter Verwendung eines Feldemissions-Rasterelektronenmikroskops, aufweist, und
die Oberflächen-Nanostruktur (2d) eine Dicke von 0,01 µm oder mehr und 1 µm oder weniger aufweist.

3. Verfahren zur Herstellung eines Verbundelements gemäß Anspruch 1 oder 2, wobei bei dem Strahlen Schleifkörner mit scharfen Vorsprüngen mit einer Partikelgröße von 30 µm oder mehr und 710 µm oder weniger mit einem Strahldruck von 0,5 MPa oder mehr und 2,0 MPa oder weniger eingebracht werden.

4. Verfahren zur Herstellung eines Verbundelements (1) gemäß einem der Ansprüche 1 bis 3, wobei bei dem Durchführen der hydrothermalen Behandlung die hydrothermale Behandlung an der Oberfläche (2a) des Aluminiumelements (2) so durchgeführt wird, dass die Oberfläche (2a) mit reinem Wasser bei 70°C oder mehr und 100°C oder weniger reagiert.

5. Verfahren zur Herstellung eines Verbundelements (1) gemäß Anspruch 4, wobei das reine Wasser eine elektrische Leitfähigkeit von 0,054 µS/cm oder mehr und 10 µS/cm oder weniger aufweist.

6. Verfahren zur Herstellung eines Verbundelements (1) gemäß einem der Ansprüche 1 bis 5, wobei bei dem Durchführen die Oberfläche (2a) des Aluminiumelements (2) mit Wasser gereinigt wird und die Oberfläche (2a) des Aluminiumelements (2) zu Aluminiumhydroxid modifiziert wird.

7. Verfahren zur Herstellung eines Verbundelements (1) gemäß einem der Ansprüche 1 bis 6, wobei das Aluminiumhydroxid mindestens eines, ausgewählt aus der Gruppe, bestehend aus Diaspor, Böhmit, Pseudoböhmit, Bayerit, Norstrandit, Gibbsit und Doyleit, enthält.

8. Verfahren zur Herstellung eines Verbundelements (1) gemäß einem der Ansprüche 1 bis 7, wobei das Triazin-Thiol-Derivat mindestens eine funktionelle Gruppe enthält, die aus der Gruppe ausgewählt ist, die aus primärem Amin, sekundärem Amin, tertiärem Amin, einer Epoxidgruppe, einer Hydroxygruppe, einer Thiolgruppe, einer Azidogruppe und einer Alkylgruppe besteht.

9. Verfahren zur Herstellung eines Verbundelements (1) gemäß einem der Ansprüche 1 bis 8, wobei bei dem Verbinden das Harzelement (4) durch Spritzgießen, thermisches Formpressen, Pressformen oder Ultraschallverbinden mit der Oberfläche (2a) des Aluminiumelements (2), auf der die Beschichtung (3) ausgebildet ist, verbunden wird.

10. Verbundelement (1), umfassend:
ein Aluminiumelement (2) mit Unebenheiten (2b) auf einer Oberfläche (2a) des Aluminiumelements (2);
eine Beschichtung (3), die ein Triazin-Thiol-Derivat enthält und mit der Oberfläche (2a) des Aluminiumelements (2) verbunden ist; und
ein Harzelement (4), das mit der Beschichtung (3) verbunden ist,
wobei eine Oberflächen-Nanostruktur (2d) auf den Unebenheiten (2b) ausgebildet ist und die Oberflächen-Nanostruktur (2d) aus Aluminiumhydroxid gebildet ist,
und **dadurch gekennzeichnet, dass**
die Unebenheiten (2b) wie Stacheln auf der Oberfläche (2a) des Aluminiumelements (2) ausgebildet sind, und
die für die Unebenheiten (2b) gemäß JIS B 0601(1994) bestimmte arithmetische mittlere Rauheit 0,7 µm oder mehr und 5,0 µm oder weniger beträgt.

11. Verbundelement (1) gemäß Anspruch 10, wobei die Oberfläche (2a) des Aluminiumelements (2) im Wesentlichen phosphorfrei ist,
das Aluminiumhydroxid mindestens eines, ausgewählt aus der Gruppe, bestehend aus Böhmit, Pseudoböhmit, Diaspor, Bayerit, Norstrandit, Gibbsit und Doyleit, enthält, und
Phosphor unterhalb der Nachweisgrenze der Röntgenphotoelektronenspektroskopie liegt und nicht nachgewiesen wird, wenn die Oberflächen-Nanostruktur (2d) einer chemischen Zusammensetzungsanalyse mittels Röntgenphotoelektronenspektroskopie unterzogen wird.

12. Verbundelement (1) gemäß Anspruch 10 oder 11, wobei das Triazin-Thiol-Derivat mindestens eine funktionelle Gruppe enthält, die aus der Gruppe ausgewählt ist, die aus primärem Amin, sekundärem Amin, tertiärem Amin, einer Epoxidgruppe, einer Hydroxygruppe, einer Thiolgruppe, einer Azidogruppe und einer Alkylgruppe besteht.

13. Verbundelement (1) gemäß einem der Ansprüche 10 bis 12, wobei die Oberfläche (2a) des Aluminiumelements (2) im Wesentlichen magnesiumfrei und natriumfrei ist, und
Magnesium und Natrium unter der Nachweisgrenze der Röntgenphotoelektronenspektroskopie liegen und nicht nachgewiesen werden, wenn die Oberflächen-Nanostruktur einer chemischen Zusammensetzungsanalyse mittels Röntgenphotoelektronenspektroskopie unterzogen wird.

14. Verbundelement (1) gemäß einem der Ansprüche 10 bis 13, wobei die Oberfläche (2a) des Aluminiumelements (2) im Wesentlichen eisenfrei und calciumfrei ist, und
Eisen und Calcium unterhalb der Nachweisgrenze der Röntgenphotoelektronenspektroskopie liegen und nicht nachgewiesen werden, wenn die Oberflächennanostruktur (2d) einer chemischen Zusammensetzungsanalyse mittels Röntgenphotoelektronenspektroskopie unterzogen wird.

15. Verbundelement (1) gemäß einem der Ansprüche 10 bis 14, wobei eine arithmetische mittlere Neigung, bestimmt gemäß JIS B 0601(1994) an der Oberfläche (2a) des mit der Beschichtung (3) verbundenen Aluminiumelements (2), 0,17 oder mehr und 0,50 oder weniger beträgt.

16. Verbundelement (1) gemäß einem der Ansprüche 10 bis 15, wobei eine quadratische Mittelwertneigung, bestimmt gemäß JIS B 0601(1994) an der Oberfläche (2a) des mit der Beschichtung (3) verbundenen Aluminiumelements (2), 0,27 oder mehr und 0,60 oder weniger beträgt.

## Revendications

1. Procédé destiné à fabriquer un élément composite (1) incluant un élément en aluminium (2) et un élément en résine (4) qui sont liés l'un à l'autre,
le procédé comprenant :
le fait de sabler une surface (2a) de l'élément en aluminium (2) pour former des aspérités (2b) sur la surface (2a) de l'élément en aluminium (2) ;
le fait de réaliser un traitement hydrothermique sur la surface (2a) de l'élément en aluminium (2) présentant les aspérités (2b) pour modifier une surface (2c) des aspérités (2b) en hydroxyde d'aluminium et former une nanostructure de surface (2d) sur la surface des aspérités (2b) ;
le fait d'appliquer un liant contenant un dérivé de triazine thiol sur la surface (2c) des aspérités (2b) de l'élément en aluminium (2) modifiée en hydroxyde d'aluminium et présentant la nanostructure de surface (2d) pour former un revêtement (3) à lier à l'élément en aluminium (2) ; et
le fait de lier le revêtement (3) et l'élément en résine (4),
dans lequel le matériau de sablage contient de l'alumine.

2. Procédé de fabrication d'un élément composite (1) selon la revendication 1, dans lequel la nanostructure de surface (2d) présente une pluralité de pores avec une taille de pores supérieure ou égale à 10 nm et inférieure à 1 000 nm, telle que déterminée en utilisant un microscope électronique à balayage à émission de champ, et
la nanostructure de surface (2d) a une épaisseur supérieure ou égale à 0,01 µm et inférieure ou égale à 1 µm.

3. Procédé de fabrication d'un élément composite selon la revendication 1 ou la revendication 2, dans lequel lors du sablage, des grains abrasifs présentant des projections pointues avec une taille de particules supérieure ou égale à 30 µm et inférieure ou égale à 710 µm sont injectés pour sabler avec une pression de projection supérieure ou égale à 0,5 MPa et inférieure ou égale à 2,0 MPa.

4. Procédé de fabrication d'un élément composite (1) selon l'une quelconque des revendications 1 à 3, dans lequel lors de la réalisation du traitement hydrothermique, le traitement hydrothermique est réalisé sur la surface (2a) de l'élément en aluminium (2) de telle sorte que la surface (2a) réagisse avec de l'eau pure à une température supérieure ou égale à 70°C et inférieure ou égale à 100°C.

5. Procédé de fabrication d'un élément composite (1) selon la revendication 4, dans lequel l'eau pure présente une conductivité électrique supérieure ou égale à 0,054 µS/cm et inférieure ou égale à 10 µS/cm.

6. Procédé de fabrication d'un élément composite (1) selon l'une quelconque des revendications 1 à 5, dans lequel lors de la réalisation, la surface (2a) de l'élément en aluminium (2) est nettoyée à l'eau et la surface (2a) de l'élément en aluminium (2) est modifiée en hydroxyde d'aluminium.

7. Procédé de fabrication d'un élément composite (1) selon l'une quelconque des revendications 1 à 6, dans lequel l'hydroxyde d'aluminium contient au moins un élément choisi parmi le groupe constitué de diaspore, boehmite, pseudo-boehmite, bayerite, norstrandite, gibbsite et doyleite.

8. Procédé de fabrication d'un élément composite (1) selon l'une quelconque des revendications 1 à 7, dans lequel le dérivé de triazine thiol contient au moins un groupe fonctionnel choisi parmi le groupe constitué d'amine primaire, d'amine secondaire, d'amine tertiaire, d'un groupe époxy, d'un groupe hydroxy, d'un groupe thiol, d'un groupe azido et d'un groupe alkyle.

9. Procédé de fabrication d'un élément composite (1) selon l'une quelconque des revendications 1 à 8, dans lequel lors de la liaison, l'élément en résine (4) est lié sur la surface (2a) de l'élément en aluminium (2) sur lequel le revêtement (3) est formé par moulage par injection, moulage par compression thermique, formage par pressage ou la liaison par ultrasons.

10. Élément composite (1) comprenant :
un élément en aluminium (2) présentant des aspérités (2b) sur une surface (2a) de l'élément en aluminium (2) ;
un revêtement (3) contenant un dérivé de triazine thiol et qui est lié sur la surface (2a) de l'élément en aluminium (2) ; et
un élément en résine (4) lié au revêtement (3),
dans lequel une nanostructure de surface (2d) est formée sur les aspérités (2b), et la nanostructure de surface (2d) est composée d'hydroxyde d'aluminium,
et **caractérisé en ce que** les aspérités (2b) sont formées comme des pics sur la surface (2a) de l'élément en aluminium (2), et
la rugosité de moyenne arithmétique déterminée pour les aspérités (2b) par la norme JIS B 0601 (1994) est supérieure ou égale à 0,7 µm et inférieure ou égale à 5,0 µm.

11. Élément composite (1) selon la revendication 10, dans lequel la surface (2a) de l'élément en aluminium (2) est sensiblement exempte de phosphore,
l'hydroxyde d'aluminium contient au moins un élément choisi parmi le groupe constitué de boehmite, pseudo-boehmite, diaspore, bayerite, norstrandite, gibbsite et doyleite, et
le phosphore tombe en dessous de la limite de détection de la spectroscopie de photoélectrons induits par rayons X et n'est pas détecté si la nanostructure de surface (2d) est soumise à une analyse de composition chimique par spectroscopie de photoélectrons induits par rayons X.

12. Élément composite (1) selon la revendication 10 ou 11, dans lequel le dérivé de triazine thiol contient au moins un groupe fonctionnel choisi parmi le groupe constitué d'amine primaire, d'amine secondaire, d'amine tertiaire, d'un groupe époxy, d'un groupe hydroxy, d'un groupe thiol, d'un groupe azido et d'un groupe alkyle.

13. Élément composite (1) selon l'une quelconque des revendications 10 à 12, dans lequel la surface (2a) de l'élément en aluminium (2) est sensiblement exempte de magnésium et de sodium, et
le magnésium et le sodium tombent en dessous de la limite de détection de la spectroscopie de photoélectrons induits par rayons X et ne sont pas détectés si la nanostructure de surface est soumise à une analyse de composition chimique par spectroscopie de photoélectrons induits par rayons X.

14. Élément composite (1) selon l'une quelconque des revendications 10 à 13, dans lequel la surface (2a) de l'élément en aluminium (2) est sensiblement exempte de fer et de calcium, et
le fer et le calcium tombent en dessous de la limite de détection de la spectroscopie de photoélectrons induits par rayons X et ne sont pas détectés si la nanostructure de surface (2d) est soumise à une analyse de composition chimique par spectroscopie de photoélectrons induits par rayons X.

15. Élément composite (1) selon l'une quelconque des revendications 10 à 14, dans lequel une inclinaison de moyenne arithmétique déterminée selon la norme JIS B 0601(1994) sur la surface (2a) de l'élément en aluminium (2) lié au revêtement (3) est supérieure ou égale à 0,17 et inférieure ou égale à 0,50.

16. Élément composite (1) selon l'une quelconque des revendications 10 à 15, dans lequel une inclinaison quadratique moyenne déterminée selon la norme JIS B 0601(1994) sur la surface (2a) de l'élément en aluminium (2) lié au revêtement est supérieure ou égale à 0,27 et inférieure ou égale à 0,60.
